# EUROPEAN PATENT APPLICATION

(11) **EP 4 778 763 A1**
(43) Date of publication of application: **22.07.2026**
(21) Application number: 24903870.4
(22) Date of filing: 26.07.2024
(51) Int. Cl.: B60K 35/22, B60K 35/60, B60K 35/55, B60K 35/81

(54) **VEHICLE DISPLAY DEVICE AND OPERATING METHOD THEREOF**

(30) Priority: 12.12.2023 KR 20230179219
(71) Applicant: LG Electronics Inc., Yeongdeungpo-gu Seoul 07336 (KR)
(72) Inventor: JEON, Byunglok, Seoul 06772 (KR); KIM, Hansoo, Seoul 06772 (KR); SON, Sanghyeun, Seoul 06772 (KR); SHIM, Inkoo, Seoul 06772 (KR); KIM, Jinhee, Seoul 06772 (KR); KIM, Byungkyu, Seoul 06772 (KR); CHUN, Sewon, Seoul 06772 (KR)
(74) Representative: Vossius & Partner Patentanwälte Rechtsanwälte mbB
(86) International application number: PCT/KR2024/010906
(87) International publication number: WO 2025/127299

(57) **Abstract**

A vehicle display device according to one embodiment of the present invention comprises: a first display disposed in a frame corresponding to the driver seat and the passenger seat in a vehicle, and provided in the longitudinal direction to correspond to the driver seat and the passenger seat; a second display which is coupled to one side of the frame and which moves between the driver seat and the passenger seat in the horizontal direction of the frame through the operation of a driving module; a reception unit for receiving passenger monitoring information on the basis of vehicle DMS sensing information; and a control unit for controlling the operation of each of the first and second displays and the driving module. Here, the control unit can display a first screen on the first display, recognize the passenger sitting in the passenger seat on the basis of the received passenger monitoring information, and determine whether to generate a second screen for the passenger seat on at least a portion of the first display on the basis of the recognition results.

## Description

### Technical Field

The present disclosure relates to a vehicular display device and, more particularly, to a vehicular display device configured to perform different operations by monitoring an occupant of a vehicle and a method of operating the vehicular display device.

### Background Art

Vehicles are apparatuses that move in a direction desired by an occupant. An automobile is a representative example of such a vehicle.

A trend has emerged in which vehicles are equipped with various sensors and electronic devices to improve user convenience. Particularly, to enhance user convenience, extensive research has been conducted on Advanced Driver Assistance Systems (ADAS). Furthermore, significant progress has been made in the development of autonomous vehicles.

In addition, the amount of time that users spend inside vehicles has increased. Accordingly, an increasing number of users regard vehicles as living spaces rather than merely as means of transportation. Accordingly, research is being conducted to provide a more immersive infotainment environment by employing a large-sized display within a vehicle.

There are needs for all occupants within a vehicle to selectively use a display installed for convenience within the vehicle in a situation-suitable manner.

### Disclosure of Invention

### Technical Problem

Objects of the present disclosure are to address the above-mentioned issue and other related issues.

One object of some embodiments of the present disclosure is to provide a vehicular display device that is capable of operating in such a manner that both a driver and an occupant in a front passenger seat can selectively control a screen in a manner suited to the context of use, and a method of operating the vehicular display device.

Another object of some embodiments of the present disclosure is to provide a vehicular display device that is capable of automatically generating a screen for an occupant in a front passenger seat on a large-sized screen in front of a front seat, depending on whether the occupant in the passenger seat is present, and a method of operating the vehicular display device.

A further object of some embodiments of the present disclosure is to provide a vehicular display device that is capable of operating in a movable manner depending on whether an occupant in a front passenger seat is present, and a method of operating the vehicular display device.

Another object of some embodiments of the present disclosure is to provide a vehicular display device that is mapped to an operation on a cooperatively operating console and is capable of operating in a manner that varies depending on whether an occupant in a front passenger seat is present, and a method of operating the vehicular display device.

### Solution to the Problem

To this end, a vehicular display device according to an embodiment of the present disclosure is configured to determine whether to generate a screen for an occupant on the basis of the result of monitoring the occupant within a vehicle.

According to one aspect of the present disclosure, there is provided a vehicular display device including: a first display unit that is arranged within a frame formed to correspond to a driver's seat and a front passenger seat within a vehicle and that is installed longitudinally to correspond to the driver's seat and the front passenger seat; a second display unit that is coupled to one side of the frame and configured to move between the driver's seat and the front passenger seat along the transverse direction of the frame through operation of a drive module; a reception unit that receives monitoring information about an occupant based on DMS sensing information from the vehicle; and a control unit that controls respective operations of the first display unit, the second display unit, and the drive module. The control unit displays a first screen on the first display unit, recognizes an occupant in the front passenger seat on the basis of the received monitoring information, and determines, based on the result of the recognition, whether a second screen for the front passenger seat is generated on at least one portion of the first display unit.

In an embodiment, in the vehicular display device, the control unit may determine a screen control target of the first display, the screen control target corresponding to an input to the second display, in a manner that varies depending on whether the occupant in the front passenger seat is recognized.

In an embodiment, in the vehicular display device, when the occupant in the front passenger seat is recognized on the basis of the received monitoring information, the control unit may execute an occupant-triggered execution mode and may display the second screen on a region of the first display unit, the region corresponding to the front passenger seat.

In an embodiment, in the vehicular display device, the second display unit may be coupled to both the first drive module and the second drive module and may move between the driver's seat and the front passenger seat along the transverse direction of the frame in response to operation of a first drive module, and at least one portion of the second display unit may be retracted into or ejected outward from the internal space of the frame in response to operation of a second drive module. In the vehicular display device, in response to the execution of the occupant-triggered execution mode, based on each control signal, the control unit may control the operation of the second drive module in such a manner that the at least one portion of the second display unit is changed to a state of being ejected outward from the frame and may control the operation of the first drive module in such a manner that the second display unit moves to a position corresponding to the front passenger seat along the transverse direction of the frame.

In an embodiment, in the vehicular display device, when it is determined that the occupant in the front passenger seat who is recognized on the basis of the received monitoring information remains motionless or is in a state of sleep for a predetermined period of time in the occupant-triggered execution mode, the control unit may control the operation of the second drive module in such a manner that the second display unit is retracted into the internal space of the frame.

In an embodiment, in the vehicular display device, the control unit may generate a second screen for the front passenger seat on the first display unit when the occupant in the front passenger seat is recognized, and then may display the first screen, rather than the second screen for the front passenger seat, on the entire first display unit, when the occupant in the front passenger seat remains motionless or is in a state of sleep for a predetermined period of time or longer.

In an embodiment, the vehicular display device may further include an input unit for controlling movement of the second display unit, wherein the control unit may determine that the second screen is not displayed, when the occupant in the front passenger seat is not recognized on the basis of the received monitoring information, and may control the first screen on the basis of an input to the input unit, according to the determination.

In an embodiment, the vehicular display device may further include a communication unit that communicates with an input unit that selectively controls either the operation of the drive module for movement of the second display unit or a screen of the first display unit, and receives a signal corresponding to an operation on the input unit. In the vehicular display device, the control unit may receive a signal mapped to the operation on the input unit and, according to the result of recognizing the occupant in the front passenger seat, may operate the drive module for the movement of the second display unit, under a first condition, and may perform screen control of the first display unit under a second condition.

In an embodiment, in the vehicular display device, when the occupant in the front passenger seat is recognized on the basis of the received monitoring information, the control unit may determine that the first condition is satisfied and may display the second display on a region of the first display unit, the region corresponding to the front passenger seat, and may control the operation of the drive module on the basis of a received first operation signal in such a manner that the second display unit moves to a position corresponding to the front passenger seat along the transverse direction of the frame.

In an embodiment, in the vehicular display device, when the second display moves to the position corresponding to the front passenger seat under the first condition, the control unit may display a control screen of the second screen on the second display unit.

In an embodiment, in the vehicular display device, when the first condition is satisfied and the first operation signal is not received, or when a second operation signal, mapped to the operation of the drive module for the movement of the second display unit along the transverse direction of the frame to a position corresponding to the driver's seat, is received, the control unit may display a control screen of the first screen on the second display unit.

In an embodiment, in the vehicular display device, when the occupant in the front passenger seat is not recognized on the basis of the received monitoring information, the control unit may determine that the second condition is satisfied, may perform screen control of the first display unit on the basis of the received signal, and may display a control screen of the first display unit on the second display unit.

In an embodiment, in the vehicular display device, the second display unit may be coupled to both the first drive module and the second drive module and may move between the driver's seat and the front passenger seat along the transverse direction in response to operation of the first drive module, and at least one portion of the second display unit may be changed to a state of being retracted into or ejected outward from the internal space of the frame in response to operation of the second drive module. In the vehicular display device, the control unit may recognize, on the basis of the received monitoring information, that the driver is engaged in driving, and, when a driving speed of the vehicle reaches or exceeds a predetermined driving speed, may generate a first control signal for operating the second drive module in such a manner that the second display unit is changed to a state of being retracted into the internal space of the frame.

According to another aspect of the present disclosure, there is provided a vehicular display device including: a first display unit that is arranged within a frame formed to correspond to a driver's seat and a front passenger seat within a vehicle and that is installed longitudinally to correspond to the driver's seat and the front passenger seat; a second display unit that is coupled to one side of the frame and is configured to move between the driver's seat and the front passenger seat along the transverse direction of the frame through operation of a drive module; a reception unit that receives monitoring information about an occupant based on DMS sensing information from the vehicle; and a control unit that controls respective operations of the first display unit, the second display unit, and the drive module. In the vehicular display device, the control unit displays a first screen on the first display unit, recognizes an occupant in the front passenger seat on the basis of the received monitoring information, and determines, based on the result of the recognition, whether the drive module operates in response to an input for movement of the second display unit.

In an embodiment, in the vehicular display device, the control unit may determine, based on the result of recognizing an occupant in the front passenger seat, that a second screen for the front passenger seat is generated at least on one portion of the first display unit.

In an embodiment, in the vehicular display device, when the occupant in the front passenger seat is recognized on the basis of the received monitoring information, the control unit may execute an occupant-triggered execution mode and may control the operation of the drive module for the movement of the second display unit, in response to a control signal generated on the basis of an input to an input unit mapped to the drive module.

In an embodiment, in the vehicular display device, when the occupant in the front passenger seat is not recognized on the basis of the received monitoring information, the control unit may restrict driving of the drive module in response to a control signal generated on the basis of an input to an input unit mapped to the drive module, and may control the first screen displayed on the first display unit, in response to the generated control signal.

### Advantageous Effects of Invention

In a vehicular display device according to an embodiment of the present disclosure and a method of operating the vehicular display device, a screen for an occupant in a front passenger seat is automatically generated on a first display installed to extend longitudinally over a long distance when the presence of the occupant in the front passenger seat is recognized. Accordingly, the occupant in the front passenger seat can be immediately provided with a desired service without requiring an additional operation.

In addition, in the vehicular display device according to the embodiment of the present disclosure and the method of operating the vehicular display device, a second display is configured to be movable and to move automatically toward the front passenger seat when the presence of the occupant in the front passenger seat of a vehicle is recognized. Accordingly, the occupant in the front passenger seat can easily control a second screen for the occupant in the front passenger seat through the second display that has moved.

In addition, in the vehicular display device according to the embodiment of the present disclosure and the method of operating the vehicular display device, when the presence of the occupant in the front passenger seat is not recognized, the movable second display is controlled in such a manner as to be used to control a screen for the driver. Accordingly, the movable second display can be utilized not only for the occupant in the front passenger seat, but also for the driver, thereby enhancing the user experience and the usability.

### Brief Description of Drawings

FIG. 1 is a block diagram that is referenced to describe a vehicular display device according to an embodiment of the present disclosure.
FIG. 2 is a block diagram that is referenced to describe both the detailed configuration of the vehicular display device according to the embodiment of the present disclosure and the operation of an input device in conjunction with the vehicular display device.
FIG. 3 is a view illustrating that the vehicular display device according to the embodiment of the present disclosure is installed within a vehicle.
FIGS. 4A and 4B are views that are referenced to describe the movements of a first display and a second display of the vehicular display device according to the embodiment in different directions.
FIG. 5 is a flowchart that is referenced to describe a method, according to an embodiment of the present disclosure, of performing screen control of the vehicular display device depending on whether an occupant in the front passenger seat is detected.
FIG. 6 is a view illustrating that, according to an embodiment of the present disclosure, a screen of a display is provided in a split mode based on the detection of the occupant in the front passenger seat.
FIG. 7 is a view illustrating that the passenger in the front passenger seat controls a screen of a first display using a second display, according to an embodiment of the present disclosure.
FIGS. 8 and 9 are views, each illustrating that, according to an embodiment of the present disclosure, the second display moves in a case where the occupant in the front passenger seat is not detected or in a drowsy state.
FIG. 10 is a view illustrating that, according to an embodiment of the present disclosure, a driver controls the screen of the first display using the second display.
FIG. 11 is a flowchart that is referenced to describe a method, according to an embodiment of the present disclosure, of moving the vehicular display device depending on whether the occupant in the front passenger seat is detected.
FIGS. 12A and 12B are conceptual diagrams that are referenced to describe in detail the method of moving the vehicular display device in FIG. 11.
FIG. 13A is a conceptual diagram that is referenced to describe a console for controlling the display or movement of the vehicular display device according to the embodiment of the present disclosure. FIGS. 13B to 13E are conceptual diagrams that are referenced to describe the operation of an associated console.
FIG. 13F is a block diagram illustrating a detailed configuration of a plurality of drive modules for moving the first display and the second display of the vehicular display device according to the embodiment of the present disclosure in different directions.
FIG. 14 is a conceptual diagram that is referenced to describe the control of the movement of the second display on the basis of an operation on the console in response to the detection of the occupant in the front passenger seat, according to an embodiment of the present disclosure.
FIG. 15 is a flowchart that is referenced to describe a method, according to an embodiment of the present disclosure, of selectively moving the vehicular display device and performing screen control of the first display, depending on whether the occupant in the front passenger seat is detected.
FIGS. 16A to 16C are conceptual diagrams that are referenced to describe the control of the movement of the vehicular display device in an occupant-triggered execution mode, according to an embodiment of the present disclosure.
FIGS. 17A and 17B are exemplary conceptual diagrams that are referenced to describe the screen control of the first display corresponding to an operation on the console in a driver-triggered execution mode, according to an embodiment of the present disclosure.
FIG. 18 is an exemplary diagram that is referenced to describe the operation of the vehicular display device according to the embodiment of the present disclosure in conjunction with a display device for a rear seat of the vehicle.

### Mode for the Invention

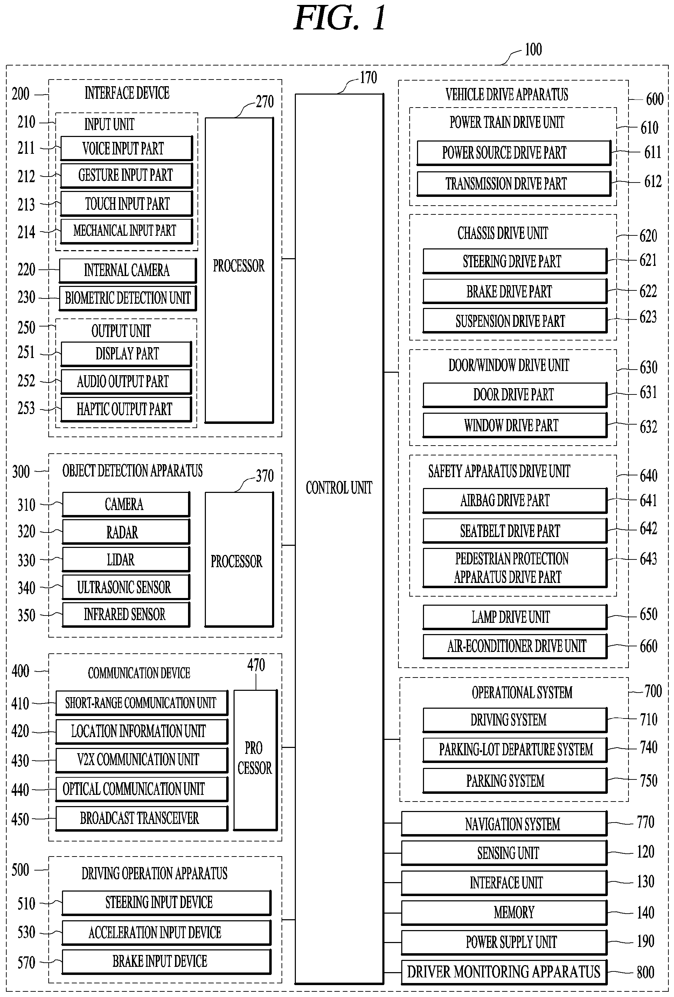

FIG. 1 is a block diagram that is referenced to describe a vehicle in accordance with an embodiment of the present disclosure.

With reference to FIG. 1, a vehicle 100 may include wheels that are rotated by a power source and a steering input apparatus 510 for adjusting the driving direction of the vehicle 100.

The vehicle 100 may be an autonomous driving vehicle. The vehicle 100 may switch to an autonomous driving mode or a manual mode on the basis of a user input. For example, the vehicle 100 may switch from the manual mode to the autonomous driving mode or from the autonomous driving mode to the manual mode on the basis of a user input received through a user interface device 200 (hereinafter referred to as a "user terminal").

The vehicle 100 may switch to the autonomous driving mode or the manual mode on the basis of driving situation information. The driving situation information may be generated on the basis of object information provided by an object detection device 300. For example, the vehicle 100 may switch from the manual mode to the autonomous driving mode or from the autonomous driving mode to the manual mode on the basis of the driving situation information generated by the object detection device 300. For example, the vehicle 100 may switch from the manual mode to the autonomous driving mode or from the autonomous driving mode to the manual mode on the basis of the driving situation information through a communication device 400.

The vehicle 100 may switch from the manual mode into the autonomous driving mode or from the autonomous driving mode to the manual mode on the basis of information, data, signals, all of which are provided by an external device.

In a case where the vehicle 100, which is an autonomous driving vehicle, may be driven in the autonomous driving mode, the vehicle 100 may be driven through the use of an operational system 700. For example, the autonomous driving vehicle 100 may be driven on the basis of information, data, and signals, all of which are generated by a driving system 710, a parking-lot departure system 740, and a parking system 750.

In a case where the vehicle 100, which is an autonomous driving vehicle, is driven in the manual mode, the vehicle 100 may receive a user input for driving through a driving operation apparatus 500. The vehicle 100 may be driven on the basis of the user input received through the driving operation apparatus 500.

The overall length refers to the length from the front end to the rear end of the vehicle 100, the width refers to the width of the vehicle 100, and the height refers to the length from the bottom of the wheel to the roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 1, the vehicle 100 may include the user interface device (hereinafter referred to as the "user terminal") 200, the object detection device 300, the communication device 400, the driving operation apparatus 500, a vehicle drive apparatus 600, the operational system 700, a navigation system 770, a sensing unit 120, a vehicular interface unit 130, a memory 140, a control unit 170 and a power supply unit 190.

According to an embodiment, the vehicle 100 may further include one or more constituent elements in addition to the constituent elements described in the present specification or may omit one or more of the described constituent elements.

The user interface device 200 is a device for communication between the vehicle 100 and the user. The user interface device 200 may receive the user input and may provide information, generated by the vehicle 100, to the user. The vehicle 100 may provide a user interface (UI) or user experience (UX) through the user interface device (hereinafter referred to as the "user terminal") 200.

The user interface device 200 may include an input unit 210, an internal camera 220, a biometric detection unit 230, an output unit 250, and a processor 270. According to an embodiment, the user interface device 200 may further include one or more constituent elements in addition to the constituent elements described in the present specification or may omit one or more of the described constituent elements.

The input unit 210 serves to receive information as input from the user. The processor 270 may analyze data collected through the input unit 210 and may convert the data into a control command of the user.

The input unit 210 may be arranged within the vehicle 100. For example, the input unit 210 may be arranged in one region of the steering wheel, one region of the instrument panel, one region of the seat, one region of each pillar, one region of the door, one region of the center console, one region of the headlining, one region of the sun visor, one region of the windshield, one region of the window, or one region of a similar location.

The input unit 210 may include a voice input part 211, a gesture input part 212, a touch input part 213, and a mechanical input part 214.

The voice input part 211 may convert a user's voice input into an electrical signal. The electrical signal, resulting from the conversion, may be provided to the processor 270 or the control unit 170. The voice input part 211 may include at least one microphone.

The gesture input part 212 may convert a user's gesture input into an electrical signal. The electrical signal, resulting from the conversion, may be provided to the processor 270 or the control unit 170.

The gesture input part 212 may include at least one of the following: an infrared sensor or an image sensor, each of which serves to detect the user's gesture input. According to an embodiment, the gesture input part 212 may detect a user's three-dimensional (3D) gesture input. To this end, the gesture input part 212 may include a plurality of light-emitting diodes that emit a plurality of infrared rays, or a plurality of image sensors.

The gesture input part 212 may detect the user's 3D gesture input through a time-of-flight (TOF) method, a structured light method, or a disparity method.

The touch input part 213 may convert the user's touch input into an electrical signal. The electrical signal, resulting from the conversion, may be provided to the processor 270 or the control unit 170.

The touch input part 213 may include a touch sensor for detecting the user's touch input. According to an embodiment, the touch input part 213 may be integrally formed with a display part 251, thereby forming a touch screen. This touch screen may provide both an input interface and an output interface between the vehicle 100 and the user.

The mechanical input part 214 may include at least one of the following: a button, a dome switch, a jog wheel, or a jog switch. An electrical signal generated by the mechanical input part 214 may be provided to the processor 270 or the control unit 170. The mechanical input part 214 may be arranged on a steering wheel, a center fascia, a center console, a cockpit module, a door, and the like.

The internal camera 220 may acquire an image of the interior of the vehicle 100. The processor 270 may detect the user's state on the basis of the image of the interior of the vehicle 100. The processor 270 may acquire the user's gaze information from the image of the interior of the vehicle 100. The processor 270 may detect the user's gesture from the image of the interior of the vehicle 100.

The biometric detection unit 230 may acquire the user's biometric information. The biometric detection unit 230 may include a sensor for acquiring the user's biometric information and may acquire the user's fingerprint information, heart rate information, and the like using the sensor. The biometric information may be used for user authentication.

The output unit 250 may generate an output associated with sight, hearing, or touch. The output unit 250 may include at least one of the following: the display part 251, an audio output part 252, or a haptic output part 253.

The display part 251 may display graphic objects that correspond to various pieces of information. The display part 251 may include at least one of the following: a liquid crystal display (LCD), a thin-film transistor-LCD (TFT LCD), an organic light-emitting diode (OLED), a flexible display, a three-dimensional (3D) display, or an e-ink display.

The display part 251 may be configured to have a layered structure or an integrated structure with the touch input part 213, thereby forming a touch screen.

The display part 251 may be configured as a head-up display (HUD). In a case where the display part 251 may be configured as the HUD, the display part 251 may be equipped with a projection module and thus may output information through an image that is projected onto the window shield or the window.

The display part 251 may be a transparent display. The transparent display may be attached to the windshield or the window. The transparent display may have a predetermined degree of transparency and may output a predetermined screen thereon. The transparent display may include at least one of the following: a thin-film electroluminescent (TFEL), a transparent organic light-emitting diode (OLED), a transparent liquid crystal display (LCD), a transmissive transparent display, or a transparent light-emitting diode (LED) display. The transparent display may have adjustable transparency.

The user interface device 200 may include a plurality of display parts, for example, display parts 251a to 251g.

The display part 251 may be arranged in one region of the steering wheel, one region 521a, 251b, or 251e of the instrument panel, one region 251d of the seat, one region 251f of each pillar, one region 251g of the door, one region of the center console, one region of the headlining, or one region of the sun visor, or may be formed in one region 251c of the windshield, or one region of the window.

The audio output part 252 converts an electrical signal, provided from the processor 270 or the control unit 170, into an audio signal and outputs the audio signal. To this end, the audio output part 252 may include at least one speaker.

The haptic output part 253 generates a tactile output. For example, the haptic output part 253 may operate to vibrate the steering wheel, the safety belt, and the seats 110FL, 110FR, 110RL, and 110RR, thereby enabling the user to perceive the vibration output.

The processor (hereinafter referred to as a "control unit") 270 may control the overall operation of each unit of the user interface device 200. According to an embodiment, the user interface device 200 may include a plurality of processors 270 or may be configured without including the processor 270.

In a case where the processor 270 is not included in the user interface device 200, the user interface device 200 may operate under the control of a processor of another apparatus within the vehicle 100 or under the control of the control unit 170.

The user interface device 200 may be referred to as a vehicular display device. The user interface device 200 may operate under the control of the control unit 170.

The object detection device 300 is a device for detecting an object located outside the vehicle 100. This object may be an external entity associated with the driving of the vehicle 100. Examples of such an object may include a lane, another vehicle, a pedestrian, a two-wheeled vehicle, a traffic signal, a light source, a road, a structure, a speed bump, a terrain feature, an animal, and more.

Features of this road may include a road surface, a curve, an upward slope, a downward slope, and the like.

This structure may be an object that is located in the vicinity of a road and fixed on the ground. Examples of such a structure may include a streetlamp, a roadside tree, a building, an electric pole, a traffic light, a bridge, and the like.

Examples of this terrain feature may include a mountain, a hill, and the like.

These objects may be classified into movable objects and stationary objects. Examples of such movable objects may conceptually include another vehicle and a pedestrian. Examples of such stationary objects may conceptually include a traffic signal, a road, and a structure.

The object detection device 300 may include a camera 310, a radar 320, a LiDAR 330, an ultrasonic sensor 340, an infrared sensor 350, and a processor 370.

According to an embodiment, the object detection device 300 may further include one or more constituent elements in addition to the constituent elements described in the present specification or may omit one or more of the described constituent elements.

The camera 310 may be located in an appropriate portion of the exterior of the vehicle to acquire an image of the surroundings of the vehicle 100. The camera 310 may be a mono camera, a stereo camera 310a, an Around View Monitoring (AVM) camera 310b, or a 360-degree camera.

For example, the camera 310 may be arranged adjacent to a front windshield within the vehicle 100 to acquire an image of the surroundings in front of the vehicle 100. Alternatively, the camera 310 may be arranged in the vicinity of the front bumper or the radiator grill.

For example, the camera 310 may be arranged adjacent to a rear glass pane within the vehicle 100 to acquire an image of the surroundings behind the vehicle 100. Alternatively, the camera 310 may be arranged adjacent to the rear bumper, the trunk, or the tailgate.

For example, the camera 310 may be arranged adjacent to at least one of the side windows within the vehicle 100 to acquire an image of the surroundings alongside the vehicle 100. Alternatively, the camera 310 may be arranged in the vicinity of the side mirror, the fender, or the door.

The camera 310 may provide an acquired image to the processor 370.

The radar 320 may include an electromagnetic wave transmission unit and an electromagnetic wave reception unit. The radar 320 may be configured based on a pulse radar method or a continuous wave radar method, in accordance with the principle of emitting a radio wave. The radar 320 may be configured based on a Frequency Modulated Continuous Wave (FMCW) method or a Frequency Shift Keying (FSK) method, each of which is among continuous wave radar methods determined according to the signal waveform.

The radar 320 may detect an object based on a time-of-flight (TOF) technique or a phase-shift technique through the use of electromagnetic waves and may determine the location of the object, the distance to the object, and the relative speed with respect to the object.

The radar 320 may be arranged in an appropriate position on the exterior of the vehicle 100 to detect an object that is located in front of, behind, or alongside the vehicle 100.

The LiDAR 330 may include a laser transmission unit and a laser reception unit. The LiDAR 330 may be configured based on the time-of-flight (TOF) technique or the phase-shift technique.

The LiDAR 330 may be configured as a drive-type or non-drive-type LiDAR.

In a case where the LiDAR 330 may be configured as a drive-type LiDAR, the LiDAR 330 may be rotated by a motor and may detect an object in the vicinity of the vehicle 100.

In a case where the LiDAR 330 may be configured as a non-drive-type LiDAR, the LiDAR 330 may detect, through light steering, an object located within a predetermined range of the vehicle 100. The vehicle 100 may include a plurality of non-drive-type LiDARs 330.

The LiDAR 330 may detect an object based on the time-of-flight (TOF) technique or the phase-shift technique through the use of laser light and may determine the location of the object, the distance to the object, and the relative speed with respect to the object.

The radar 330 may be arranged in an appropriate position on the exterior of the vehicle 100 to detect an object that is located in front of, behind, or alongside the vehicle 100.

The ultrasonic sensor 340 may include an ultrasonic wave transmission unit and an ultrasonic wave reception unit. The ultrasonic sensor 340 may detect an object through the use of ultrasonic waves and may determine the location of the object, the distance to the object, and the relative speed with respect to the object.

The ultrasonic sensor 340 may be arranged in an appropriate position on the exterior of the vehicle 100 to detect an object located in front of, behind, or alongside the vehicle 100.

The infrared sensor 350 may include an infrared ray transmission unit and an infrared ray reception unit. The infrared sensor 340 may detect an object through the use of infrared light and may determine the location of the object, the distance to the object, and the relative speed with respect to the object.

The infrared sensor 350 may be arranged in an appropriate position on the exterior of the vehicle 100 to detect an object located in front of, behind, or alongside the vehicle 100.

The processor 370 may control the overall operation of each unit of the object detection device 300.

The processor 370 may detect and track an object on the basis of an acquired image. The processor 370 may perform operations, such as calculation of a distance to the object and calculation of the relative speed with respect to the object, through the use of an image processing algorithm.

The processor 370 may detect and track an object through the use of reflected electromagnetic waves, resulting from the reflection of emitted electromagnetic waves by the object. The processor 370 may perform operations, such as calculation of the distance to the object and calculation of the relative speed with respect to the object, through the use of electromagnetic waves.

The processor 370 may detect and track an object through the use of reflected laser beams, resulting from the reflection of emitted lasers by the object. The processor 370 may perform operations, such as calculation of the distance to the object and calculation of the relative speed with respect to the object, through the use of laser beams.

The processor 370 may detect and track an object through the use of reflected ultrasonic waves, resulting from the reflection of emitted ultrasonic waves by the object. The processor 370 may perform operations, such as calculation of the distance to the object and calculation of the relative speed with respect to the object, through the use of ultrasonic waves.

The processor 370 may detect and track an object through the use of reflected infrared light, resulting from the reflection of emitted infrared light by the object. The processor 370 may perform operations, such as calculation of the distance to the object and calculation of the relative speed with respect to the object, through use of infrared light.

According to an embodiment, the object detection device 300 may include a plurality of processors 370 or may be configured without including the processor 370. The camera 310, the radar 320, the LiDAR 330, the ultrasonic sensor 340, and the infrared sensor 350 may each include a respective processor for individual operation.

In a case where the processor 370 is not included in the object detection device 300, the object detection device 300 may operate under the control of a processor of an apparatus within the vehicle 100 or under the control of the control unit 170.

The object detection device 300 may operate under the control of the control unit 170.

The communication device 400 is a device for performing communication with an external device. The external device here may be another vehicle, a mobile terminal, or a server.

To perform communication, the communication device 400 may include a transmission antenna, a reception antenna, and at least one of the following: a radio frequency (RF) circuit or an RF device, each of which is capable of implementing various communication protocols.

The communication device 400 may include a short-range communication unit 410, a location information unit 420, a V2X communication unit 430, an optical communication unit 440, a broadcast transceiver 450, and a processor 470.

According to an embodiment, the communication device 400 may further include one or more constituent elements in addition to the constituent elements in the present specification or may omit one or more of the described constituent elements.

The short-range communication unit 410 is a unit for short-range communication. The short-range communication unit 410 may support short-range communication using at least one of the following technologies: Bluetooth^{™}, Radio Frequency IDentification (RFID), Infrared Data Association (IrDA), Ultra-Wide Band (UWB), Zig Bee, Near Field Communication (NFC), Wireless-Fidelity (Wi-Fi), Wi-Fi Direct, or Wireless Universal Serial Bus (USB).

The short-range communication unit 410 may form short-range wireless area networks and may perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing wireless communication with a server (Vehicle to Infrastructure (V2I)), with another vehicle (Vehicle to Vehicle (V2V)), or with a pedestrian (Vehicle to Pedestrian (V2P)). The V2X communication unit 430 may include an RF circuit capable of implementing protocols for communication with an infrastructure (V2I), communication between vehicles (V2V), and communication with a pedestrian (V2P).

The optical communication unit 440 is a unit for performing communication with an external device through the use of light. The optical communication unit 440 may include an optical transmission part for converting an electrical signal into an optical signal and transmitting the optical signal to the outside, and an optical reception part for converting the received optical signal back into an electrical signal.

According to an embodiment, the optical transmission part may be integrally formed with a lamp included in the vehicle 100.

The broadcast transceiver 450 is a unit for receiving a broadcast signal from an external broadcast management server or transmitting a broadcast signal to the broadcast management server over a broadcast channel. The broadcast channel may refer to a satellite channel, a terrestrial channel, or both. The broadcast signal may include a TV broadcast signal, a radio broadcast signal, and a data broadcast signal.

The processor 470 may control the overall operation of each unit of the communication device 400.

According to an embodiment, the communication device 400 may include a plurality of processors 470 or may be configured without including the processor 470.

In a case where the processor 470 is not included in the communication device 400, the communication device 400 may operate under the control of a processor of another device within the vehicle 100 or under the control of the control unit 170.

The communication device 400, together with the user interface device 200, may constitute a vehicular display device. In this case, the vehicular display device may be referred to as a telematics device or an Audio Video Navigation (AVN) device.

The communication device 400 may operate under the control of the control unit 170.

The driving operation apparatus 500 is an apparatus for receiving a user input for driving.

In the manual mode, the vehicle 100 may be driven on the basis of a signal provided by the driving operation apparatus 500.

The driving operation apparatus 500 may include the steering input device 510, an acceleration input device 530, and a brake input device 570.

The steering input apparatus 510 may receive an input regarding the driving direction of the vehicle 100 from the user. The steering input apparatus 510 is preferably formed in the form of a wheel, thereby enabling a steering input through the rotation of the wheel. According to an embodiment, the steering input apparatus may also be formed in the shape of a touch screen, a touchpad, or a button.

The acceleration input apparatus 530 may receive, from the user, an input for accelerating the vehicle 100. The brake input apparatus 570 may receive, from the user, an input for decelerating the vehicle 100. The acceleration input apparatus 530 and the brake input apparatus 570 are preferably formed in the shape of a pedal. According to an embodiment, the acceleration input apparatus or the brake input apparatus may also be formed in the shape of a touch screen, a touchpad, or a button.

The driving operation apparatus 500 may operate under the control of the control unit 170.

The vehicle drive apparatus 600 is an apparatus that electrically controls driving of various apparatuses within the vehicle 100.

The vehicle drive apparatus 600 may include a power train drive unit 610, a chassis drive unit 620, a door/window drive unit 630, a safety apparatus drive unit 640, a lamp drive unit 650, and an air-conditioner drive unit 660.

According to an embodiment, the vehicle drive apparatus 600 may further include one or more constituent elements in addition to the constituent elements described in the present specification or may omit one or more of the described constituent elements.

The vehicle drive apparatus 600 may include a processor. Units of the vehicle drive apparatus 600 may each include a respective processor for individual operation.

The power train drive unit 610 may control the operation of a power train apparatus.

The power train drive unit 610 may include a power source drive part 611 and a transmission drive part 612.

The power source drive part 611 may execute control of a power source of the vehicle 100.

For example, in a case where the power source of the vehicle 100 is a fossil fuel-based engine, the power source drive part 611 may execute electronic control of the engine. Accordingly, output torque and other parameters of the engine may be controlled. The power source drive part 611 may adjust the engine output torque under the control of the control unit 170.

For example, in a case where the power source of the vehicle 100 is an electric energy-based motor, the power source drive part 611 may execute control of the motor. The power source drive part 611 may adjust the rotational speed, torque, and other parameters of the motor under the control of the control unit 170.

The transmission drive part 612 may execute control of a transmission. The transmission drive gearbox part 612 may adjust the state of the transmission. The transmission drive part 612 may change the state of the transmission to Drive (D), Reverse (R), Neutral (N), or Park (P).

In a case where the power source of the vehicle 100 is an engine, the transmission drive part 612 may adjust the engaged state of a gear in Drive (D).

The chassis drive unit 620 may control the operation of a chassis apparatus. The chassis drive unit 620 may include a steering drive part 621, a brake drive part 622, and a suspension drive part 623.

The steering drive part 621 may execute electronic control of a steering apparatus within the vehicle 100. The steering drive part 621 may change the driving direction of the vehicle 100.

The brake drive part 622 may execute electronic control of a brake apparatus within the vehicle 100. For example, the brake drive part 622 may reduce the speed of the vehicle 100 by controlling the operation of the brakes provided on the wheels.

The brake drive part 622 may individually control each of a plurality of brakes. The brake drive part 622 may control application of braking forces to the plurality of wheels in a different manner.

The suspension drive part 623 may execute electronic control of a suspension apparatus within the vehicle 100. For example, in a case where a road surface is uneven, the suspension drive part 623 may reduce vibration of the vehicle 100 by controlling the suspension apparatus. The suspension drive part 623 may control each of the plurality of suspensions individually.

The door/window drive unit 630 may execute electronic control of a door apparatus or a window apparatus within the vehicle 100.

The door/window drive unit 630 may include a door drive part 631 and a window drive part 632.

The door drive part 631 may execute control of the door apparatus. The door drive part 631 may control opening or closing of a plurality of doors included in the vehicle 100. The door drive part 631 may control opening or closing of the trunk or the tailgate. The door drive part 631 may control opening or closing of the sunroof.

The window drive part 632 may execute electronic control of the window apparatus. The window drive part 632 may control opening or closing of a plurality of windows included in the vehicle 100.

The safety apparatus drive unit 640 may execute electronic control of various safety apparatuses within the vehicle 100.

The safety apparatus drive unit 640 may include an airbag drive part 641, a seat belt drive part 642, and a pedestrian protection apparatus drive part 643.

The airbag drive part 641 may execute electronic control of an airbag apparatus within the vehicle 100. For example, when a risk is detected, the airbag drive part 641 may control an airbag in such a manner that the airbag is deployed.

The seat belt drive part 642 may execute electronic control of a seat belt apparatus within the vehicle 100. For example, when a risk is detected, the seat belt drive part 642 may secure occupants seated in seats 110FL, 110FR, 110RL, and 110RR by tightening respective seat belts.

The pedestrian protection apparatus drive part 643 may execute electronic control of the hood lift and the pedestrian airbag. For example, when a collision with a pedestrian is detected, the pedestrian protection apparatus drive part 643 may control the hood lift and the pedestrian airbag in such a manner that the hood lift and the pedestrian airbag are deployed.

The lamp drive part 650 may execute electronic control of various lamp apparatuses within the vehicle 100.

The air-conditioner drive unit 660 may execute electronic control of an air conditioner within the vehicle 100. For example, when the temperature inside the vehicle 100 is high, the air-conditioner drive unit 660 may control the air conditioner to operate in such a manner as to supply cool air into the vehicle 100.

The vehicle drive apparatus 600 may include a processor. Units of the vehicle drive apparatus 600 may each include a respective processor for individual operation.

The vehicle drive apparatus 600 may operate under the control of the control unit 170.

The operational system 700 is a system that controls various driving functions of the vehicle 100. The operational system 700 may operate in the autonomous driving mode.

The operational system 700 may include the driving system 710, the parking-lot departure system 740, and the parking system 750.

According to an embodiment, the operational system 700 may further include one or more constituent elements in addition to the constituent elements described in the present disclosure or may emit one or more of the described constituent elements.

The operational system 700 may include a processor. Units of the operational system 700 may each include a respective processor for individual operation.

According to an embodiment, in a case where the operational system 700 may be implemented in software, the operational system 700 may also conceptually operate at a lower level than the control unit 170.

According to an embodiment, the operational system 700 may conceptually include at least one of the following: the user interface device 200, the object detection device 300, the communication device 400, the vehicle drive apparatus 600, or the control unit 170.

The driving system 710 may enable the vehicle 100 to be driven.

The driving system 710 may receive navigation information from the navigation system 770, may provide a control signal to the vehicle drive apparatus 600, and may enable the vehicle 100 to be driven. The driving system 710 may receive object information from the object detection device 300, may provide a control signal to the vehicle drive apparatus 600, and may enable the vehicle 100 to be driven. The driving system 710 may receive a signal from an external device through the communication device 400, may provide a control signal to the vehicle drive apparatus 600, and may enable the vehicle 100 to be driven.

The parking-lot departure system 740 may perform a maneuver to guide the vehicle 100 out of a parking lot.

The parking-lot departure system 740 may receive the navigation information from the navigation system 770, may provide a control signal to the vehicle drive apparatus 600, and may perform a maneuver to guide the vehicle 100 out of the parking lot. The parking-lot departure system 740 may receive object information from the object detection device 300, may provide a control signal to the vehicle drive apparatus 600, and may perform a maneuver to guide the vehicle 100 out of the parking lot. The parking-lot departure system 740 may receive a signal from an external device through the communication device 400, may provide a control signal to the vehicle drive apparatus 600, and may perform a maneuver to vehicle the vehicle 100 out of the parking lot.

The parking system 750 may perform a maneuver to park the vehicle 100.

The parking system 750 may receive the navigation information from the navigation system 770, may provide a control signal to the vehicle drive apparatus 600, and may perform a maneuver to park the vehicle 100. The parking system 750 may receive object information from the object detection device 300, may provide a control signal to the vehicle drive apparatus 600, and may perform a maneuver to park the vehicle 100. The parking system 750 may receive a signal from an external device through the communication device 400, may provide a control signal to the vehicle drive apparatus 600, and may perform a maneuver to park the vehicle 100.

The navigation system 770 may provide the navigation information. The navigation information may include at least one of the following: map information, preset destination information, path information based on the set destination, information about various objects on a path, lane information, or current vehicular location information.

The navigation system 770 may include a memory and a processor. The navigation information may be stored in the memory. The processor may control the operation of the navigation system 770.

According to an embodiment, the navigation system 770 may update previously stored information by receiving information from an external device through the communication device 400.

According to an embodiment, the navigation system 770 may also be classified as a sub-constituent element of the user interface device 200.

The sensing unit 120 may sense the state of the vehicle 100. The sensing unit 120 may include a posture sensor (e.g., a yaw sensor, a roll sensor, a pitch sensor, or the like), a collision sensor, a wheel sensor, a speed sensor, a tilt sensor, a weight-detection sensor, a heading sensor, a gyro sensor, a position module, a vehicle forward/backward movement sensor, a battery sensor, a fuel sensor, a tire sensor, a steering sensor sensing the turning of a steering wheel, an in-vehicle temperature sensor, an in-vehicle humidity sensor, an ultrasonic sensor, an illumination sensor, an accelerator position sensor, a brake pedal position sensor, and other sensors.

The sensing unit 120 may acquire vehicular posture information, vehicular collision information, vehicular direction information, vehicular location information (GPS information), vehicular angle information, vehicular speed information, vehicular acceleration information, vehicular tilt information, vehicular forward/backward movement information, battery information, fuel information, tire information, vehicular lamp information, in-vehicle temperature information, and in-vehicle humidity information. Furthermore, the sensing unit 120 may acquire signals that result from sensing a steering wheel rotation angle, outside-vehicle illumination, pressure applied to an acceleration pedal, pressure applied to a brake pedal, and the like.

The sensing unit 120 may further include an acceleration pedal sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and other sensors.

The vehicular interface unit 130 may serve as a path to various types of external devices connected to the vehicle 100. For example, the vehicular interface unit 130 may include a port that enables a connection with a mobile terminal and may be connected to the mobile terminal through the port. In this case, the vehicular interface unit 130 may exchange data with the mobile terminal.

The vehicular interface unit 130 may serve as a path for supplying electrical energy to the connected mobile terminal. In a case where the mobile terminal is electrically connected to the vehicular interface unit 130, the vehicular interface unit 130 may supply electrical energy, supplied from the power supply unit 190, to the mobile terminal under the control of the control unit 170.

The memory 140 is electrically connected to the control unit 170. Basic data for the units, control data for controlling operations of the units, and input and output data may be stored in the memory 140. Examples of the memory 140 may include various hardware storage devices, such as ROM, RAM, EPROM, flash memory, and a hard disk drive. Programs for processing or control by the control unit 170 and various data for the overall operation of the vehicle 100 may be stored in the memory 140.

According to an embodiment, the memory 140 may be integrally formed with the control unit 170 or may be configured as a sub-constituent element of the control unit 170.

The control unit 170 may control the overall operation of each unit within the vehicle 100. The control unit 170 may be referred to as an Electronic Control Unit (ECU).

The power supply unit 190 may supply power necessary for the operation of each constituent element under the control of the control unit 170. Specifically, the power supply unit 190 may be supplied with power from the battery within the vehicle 100 or from other sources.

At least one processor and the control unit 170, which are included in the vehicle 100, may be configured based on at least one of the following: application-specific integrated circuits (ASICs), digital signal processors (DSPs), digital signal processing devices (DSPDs), programmable logic devices (PLDs), field-programmable gate arrays (FPGAs), processors, controllers, microcontrollers, microprocessors, or electric units performing other functions.

In embodiments of the present disclosure, the terms "driver," "occupant," and "driver or occupant (driver/occupant)" are collectively used to refer to one or more persons, such as a driver, a passenger, a fellow passenger, and an occupant, who ride in a vehicle that is capable of autonomous driving according to an embodiment of the present disclosure.

In addition, in the embodiments of the present disclosure, the term "vehicle" is used to refer to a vehicle capable of autonomous driving by means of artificial intelligence (AI) or to a vehicle configured to receive autonomous driving functionality as a service. Additionally, in the embodiments of the present disclosure, the term "vehicle" is used to refer to a vehicle capable of switching among manual driving by the driver, semi-autonomous driving, and full self-driving.

In the embodiments of the disclosure, the term "vehicular display device" refers to a device arranged in front of a front seat of the vehicle 100, and displays of the vehicular display device may be formed to be movable in different directions.

The term "vehicular display device" may be used to refer to a movable center information display (CID), to include both a movable CID and a head-up display (HUD), or to include a movable CID, a HUD, and an operation unit associated with the movement of the CID.

The vehicular display device may be formed in such a manner that the displays thereof are movable in different directions.

The vehicular display device may include displays for displaying various screens, and may display a screen displayed on the HUD through a corresponding display. In addition, the vehicular display apparatus may be configured in such a manner that the CID is movable to control the screen displayed on the HUD.

The vehicular display device may generate a signal for moving the CID in response to operation of the operation unit installed at a different position within the vehicle.

The displays of the vehicular display device may be activated or deactivated in response to the movements thereof in different directions within the front seat of the vehicle. The vehicular display device may be used by an occupant in the driver's seat or may be used as a flexible controller that can be controlled by an occupant in the passenger front seat.

In addition, the displays of the vehicular display device may operate to switch a screen of the HUD in response to the movement thereof in different directions within the front seat of the vehicle.

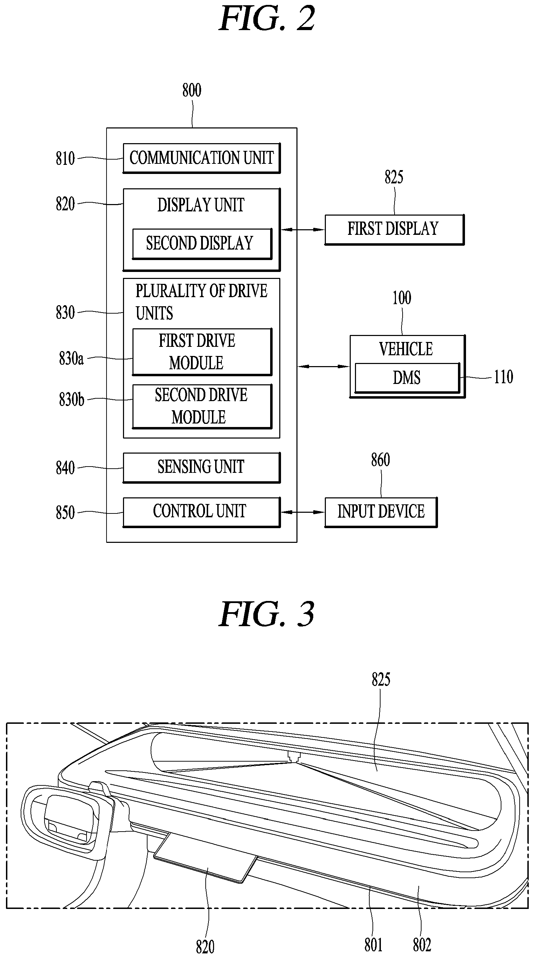

FIG. 2 is a block diagram that is referenced to describe a vehicular display device 800 according to an embodiment of the present disclosure.

In FIG. 2, the vehicular display device 800 may communicate with constituent components of the vehicle 100, and, for example, may be installed in the front seat within the vehicle 100.

The vehicular display device 800 in FIG. 2 may include a communication unit 810, a display unit 820, a plurality of drive units 830, a sensing unit 830, and a control unit 850. In addition, the vehicular display device 800 can be understood as including an input device 860 installed at a different position within the vehicle 100. In this case, the vehicular display apparatus 800 may receive a signal generated in response to an operation on the input device 860 and, based on the received signal, may perform an operation.

The vehicular display device 800 may include a first display 825 and a second display 820. The second display 820 is configured to display information associated with a visual image displayed on the first display 825 or to be movable in a different direction than the first display 825 in order to function as a controller. In addition, in some embodiments, the vehicular display device 800 may be configured to operate in conjunction with the first display 825 on the assumption that the vehicular display device 800 and the first display 825 installed within the vehicle 100 are devices operating independently of each other.

The first display 825 may also be referred to as a rectangular display mounted on a frame in which a cluster for the front seat of the vehicle is included. At this point, the cluster may be displayed on the rectangular display in an integrated manner. In addition, the first display 825 can be understood as being a constituent included in the vehicular display apparatus 800 or as a constituent separate from the vehicular display apparatus 800.

Unless otherwise described, the display unit 820 or the display unit 820 of the vehicular display device 800, as disclosed below, refers to the second display 820 configured to be movable in a different direction than the first display 825. The first display 825 formed to extend over a long distance in the longitudinal direction in such a manner as to cover the cluster for the front seat of the vehicle is referred to separately from the display unit 820.

In FIG. 2, in a case where the vehicular display device 800 is configured to include the first display (or the longitudinal display), a screen, which is output on the first display 825, may be controlled through the display unit 820.

The communication unit 810 may receive sensing values and/ or control values from the vehicle 100 and/or various sensors within the vehicle 100, and from various apparatuses or systems, such as an advanced driver assistance system (ADAS) and a driver monitoring system (DMS).

As an example, the communication unit 810 may receive, as the control value, a drive signal for operating the plurality of drive units 830 from the input device 860 installed separately within the vehicle 100. As another example, the communication unit 810 may receive, as the sensing values, sensing values for operating the plurality of drive units 830 or restricting respective operations thereof in association with safe driving.

The display unit 820 may display a screen and may be formed to be movable in a different direction than the first display 825. As described above, the display unit 820 refers to the second display 820.

Specifically, the display unit 820 may move between the driver's seat and the passenger front seat of the vehicle 100 (in a first movement direction) and move to be retracted into or to be exposed outward from the provided frame (in a second movement direction). At this point, the movements in the first and second movement directions are performed independently of each other.

The plurality of drive units 830 may include a first drive module 830a and a second drive module 830 that operate such that t the display unit 820 of the vehicular display device 800 is movable in a different direction than the first display 825.

The first drive module 830a and the second drive module 830b operates independently of each other in response to different drive signals. The first drive module 830a and the second drive module 830b supply driving forces, respectively, to the display unit 820 to move the display unit 820 in a different direction than the first display 825. To this end, the first drive module 830a and the second drive module 830b each may include respective motors.

According to an embodiment, the first drive module 830a operates in such a manner that the display unit 820 moves in a first direction. According to an embodiment, the second drive module 830b operates in such a manner that the display unit 820 moves in a second direction different from the first direction.

At this point, the first direction is a movement direction in which the display unit 820 moves in the transverse direction (left-right direction), and the second direction is a movement direction in which the display unit 820 moves in the longitudinal direction (up-down direction). Alternatively, the first direction may be a movement direction in which the display unit 820 moves between the driver's seat (or the center) and the front passenger seat within the vehicle, and the second direction may be a movement direction in which the display unit 820 moves to be retracted into the internal space of the frame or to be exposed outward from the internal space.

The first drive module 830a may include a drive motor (hereinafter referred to as a "first drive motor") that drives the display unit 820 such that the display unit 820 moves in the transverse direction (left-right direction). Specifically, the first drive motor is driven by a control signal from the control unit 850, which receives a first drive signal, and moves a movable frame included in the first drive module 830a in the transverse direction (left-right direction), thereby enabling the display unit 820 seated on the movable frame to move in the first direction.

The second drive module 830b may include a drive motor (hereinafter referred to as a "second drive motor") that drives the display unit 820 such that the display unit 820 moves in the up-down direction (longitudinal direction). Specifically, the second drive motor is driven by a control signal from the control unit 850, which receives a second drive signal, and moves a movable frame included in the second drive module 830b to move in the up-down direction (longitudinal direction), thereby enabling the display unit 820 seated on the movable frame to move in the second direction.

The first drive motor and the second drive motor are arranged in different directions in order to provide respective driving forces for moving the display unit 820 in a different direction than the first display 825. For example, the first drive motor and the second drive motor may be arranged along directions, respectively, that are orthogonal to each other.

In addition, at least one of the first and second drive motors may be arranged in the same frame as the display unit 820 and, when the frame moves, may move together with the display unit 820.

The control unit 850 may control the generation of rotational force in the first drive motor in different directions based on detailed direction information included in the first drive signal.

For example, the first drive motor may control the display unit 820 to rotate in a first rotational direction in such a manner that the display unit 820 may move from the driver's seat (or the center) to the front passenger seat. In addition, for example, the first drive motor may control the display unit 820 to rotate in a second rotational direction in such a manner that the display unit 820 moves from the front passenger seat to the driver's seat (or the center).

In addition, the control unit 850 may control the generation of rotational force in the second drive motor in different directions based on detailed direction information included in the second drive signal.

For example, the second drive motor may control the display unit 820 to rotate in the first rotational direction in such a manner that the display unit moves from the driver's seat (or the center) to the front passenger seat. In addition, for example, the first drive motor may control the display unit 820 to rotate in the second rotational direction in such a manner that the display unit 820 moves from the front passenger seat to the driver's seat (or the center).

In addition, in response to the movement of the display unit 820, the control unit 850 may generate a control signal for controlling a screen that is displayed on the first display 825, and may transfer the generated control signal to the second display 820.

The sensing unit 830 may detect an input to the vehicular display device 800. In addition, the sensing unit 830 may detect the movement of the second display unit 820 in response to the respective operations of the plurality of drive units 830.

The sensing unit 830 may detect both a movement distance and a relative position of the second display unit 820 in response to driving by the first drive module 830a. In addition, the sensing unit 830 may detect the movement distance and relative position of the second display unit 820 in response to driving by the second drive module 830b.

The sensing unit 830 may transfer, to the control unit 850, sensing values obtained by detection in response to the respective operations of the plurality of drive units 830 in such a manner that the movement distance and relative position of the second display unit 820 are recognized.

The sensing unit 830 may detect whether the movement distance and relative position of the second display unit 820 have reached a predetermined threshold distance and a predetermined threshold position, respectively, and may transfer the result of the search to the control unit 850.

When the second display unit 820 reaches the threshold distance and the threshold position, the control unit 850 may recognize that the second display unit 820 is prevented from moving in any direction beyond the threshold distance and threshold position. Accordingly, when a drive signal for moving in any direction beyond the threshold distance and the threshold position is received, the control unit 850 may control the second display unit 820 in such a manner that the second display unit 820 performs an operation for restricting the movement.

The control unit 850 controls the overall operation of the vehicular display device 800. Through communication with the vehicle 100, the control unit 850 may receive sensing and state information of the vehicle 100 and transfer state and operation information of the vehicular display device 800 to the vehicle 100. In addition, the control unit 850 may receive the results of monitoring a driver's or occupant's state through communication with a DMS 110 of the vehicle 100 and control the operation of the vehicular display device 800, the operation varying based on the received result of the monitoring.

The control unit 850 may generate a drive signal for driving the plurality of drive units 830 in order to move the display unit 820. The controller 850 may generate the first drive signal for operating the first drive module 830a in such a manner that the display part 820 moves in the first direction. In addition, the control unit 850 may generate the second drive signal for operating the second drive module 830b in such a manner that the display unit 820 moves in the second direction different from the first direction.

The control unit 850 may control a screen that is displayed on the first and second display unis 820 and 825.

The control unit 850 may control each operation of the plurality of drive units 830 based on the first and/or second drive signal received through the communication unit 810. Specifically, the control unit 850 controls driving of the first drive module 830a on the basis of the first drive signal and controls driving of the second drive module 830b based on the second drive signal.

The control unit 850 controls the first drive module 830a to operate based on the first drive signal, thereby enabling the second display unit 820 to move in the first direction. At this point, the first direction includes detailed direction information. The control unit 850 controls the operation of the first drive module 830a based on the detailed direction information included in the first direction, in such a manner that the second display unit 820 moves from the driver's seat (or, the center) of the vehicle 100 to the front passenger seat thereof, or from the front passenger seat thereof to the driver's seat (or, the center) thereof.

In addition, the control unit 850 controls the operation of the second drive module 830a based on the second drive signal, thereby enabling the second display unit 820 to move in the second direction. At this point, the second direction includes detailed direction information. The control unit 850 controls the operation of the second drive module 830b based on the detail direction information included in the second direction, such that the second display unit 820 is exposed outward from the frame of the vehicle 100 or is retracted into the internal space of the frame.

The input device 860 may be configured to receive a user operation input for moving the display unit 820. The input device 860 may be installed at a different position in the vehicle 100 than the vehicular display device 800. In addition, the input device 860 may be configured to receive a user operation input for controlling a screen of at least one surface of the first and second displays 820 and 825.

For example, the input device 860 may be mounted in parallel with the space between the driver's seat and the front passenger seat and may be arranged vertically apart from the vehicular display device 800. In addition, for example, the input device 860 may be mounted in a position for convenient manual operation by occupants in the driver's seat and the front passenger seat without requiring the occupants to change his/her seated posture.

In the present specification, the input device 860 may be referred to as a "console 900," a "console display," or an "input unit." The input device 860 may be used as an input device that controls the movement of the vehicular display device 800. In addition, the input device 860 may be used as an input device that controls at least one surface of the first and second displays 820 and 825.

In an embodiment, the input device 860 may be configured as a device separate from the vehicular display device 800. In this case, the input device 860 and the vehicular display device 800 may perform wired or wireless communication such that the first display 825 and the second display 820 of the vehicular display device 800 move in different directions in response to an operation on the input device 860.

An operation may be performed on the input device 860 to correspond to an operation method corresponding to the movement direction in such a manner that the movement direction of the vehicular display device 800 can be intuitively controlled. For example, the operation on the input device 860 may be a tilting operation corresponding to the movement direction of the vehicular display device 800.

The input device 860 may communicate with the vehicular display device 800 through a communication module (not illustrated). A signal generated in response to an operation on the input device 860 may be received by the communication unit 810 of the vehicular display device 800 through the communication module (not illustrated).

Specifically, through the control unit 850, a signal corresponding to an authorized user's operation input to the input device 860 may be converted into a drive signal and transferred to the plurality of drive units 830. Different drive modules of the plurality of drive units 830 may operate on the basis of different operations performed on the input device 860.

For example, when a first signal generated in response to the first operation on the input device 860 is transferred to the vehicular display device 800, the control unit 850 may transfer the first drive signal, corresponding to the received first signal, to a first drive module 830a, thereby controlling the display unit 820 to move in a first direction.

At this point, the first operation may include information corresponding to one of a plurality of different directions, for example, a direction toward the driver's seat (the center) or a direction toward the front passenger seat. In addition, the first direction may be one of a plurality of directions in which the display unit 820 moves between the driver's seat (the center) and the front passenger seat.

In addition, for example, when a second signal generated in response to a second operation on the input device 860 is transferred to the vehicular display device 800, the control unit 850 may transfer the second drive signal, corresponding to the received second signal, to a second drive module 830a, thereby controlling the display unit 820 to move in a second direction.

At this point, the second operation may correspond to one of a plurality of different directions, for example, a direction toward the dashboard of the vehicle or a direction toward the rear seat of the vehicle. In addition, the second direction may be one of a plurality of directions in which the display unit 820 moves to be retracted into the internal space of the frame in which constituent components of the vehicular display device 800 are embedded or to be ejected outward from the internal space.

FIG. 3 is a view illustrating that the vehicular display device 800 according to the embodiment of the present disclosure is installed within the vehicle 100.

As illustrated in FIG. 3, the vehicular display device 800 is connected to one side of a frame 802 formed to correspond to the driver's seat (or the center) and the front passenger seat within the vehicle 100, and is formed to include the second display 820 configured to perform screen control of a rectangular display, namely, the first display 825, which is installed within the frame.

In FIG. 3, the frame 802 is formed to correspond to the cluster, and may extend over a long distance from the driver's seat of the vehicle 100 to the front passenger seat thereof. In addition, a rectangular display, namely, the first display 825 is installed on the front surface of the frame 802.

A cabin may be formed within the frame 802, and a slot 801 may be formed in the lower end portion of the frame 802 in a manner that extends over a long distance in the transverse direction. The second display 820 may move in a lateral direction along the slot 801 in response to a drive signal. In addition, in response to another drive signal, the second display 820 may be retracted into the cabin through the slot 801 or ejected outward from the cabin through the slot 801.

At least one constituent component of the vehicular display device 800 may be positioned in the cabin within the frame 802. For example, a plurality of drive modules for moving the first display 825 and the second display 820 of the vehicular display device 800 in different directions, and a portion of a frame, which includes the plurality of drive modules, may be arranged in the cabin with the frame 802. At this point, as the first display 825 and the second display 820 of the vehicular display device 800 move in different directions, both the plurality of drive modules and the frame may move in different directions in the cabin within the frame 802.

The vehicular display device 800 may include a center Information display (CID). In the present specification, the center information display (CID) may be referred to as the display unit 820, namely, the second display 820.

The second display 820 may be located between the driver's seat (or the center) and the front passenger seat, and may be formed to move between the front passenger seat and the driver's seat in response to the drive signal. Specifically, the second display 820 may move in a lateral direction along the slot 801, which is formed, for example, in the lower end portion on one side of the frame.

In addition, on the basis of another drive signal, the second display 820 may move to be retracted into the internal space of the frame 802 through the slot 801 or to be exposed outward from the internal space of the frame 802 through the slot 801.

The constituent components of the vehicular display device 800, which has been described above with reference to FIG. 2, may be installed in the internal space of the frame 802.

For example, drive motors, a stationary or movable frame, and additional constituent components may be positioned in the internal space of the frame 802. Each of the drive motors is included in a respective one of the plurality of drive units 830. The plurality of drive units 830 provide respective driving forces for moving the first display 825 and the second display 820 of the vehicular display device 800 in different directions.

In addition, for example, the control unit, namely, a processor 850, for controlling the movement of the vehicular display device 800 and a screen thereof, may be provided in the internal space of the frame 802. At this point, examples of the processor 850 may include a single system-on-a-chip (SoC), a microcontroller unit (MCU), and similar devices, each of which may optionally include a hypervisor, a central processing unit, an RT core, an AP core, a GPU, and the like. In addition, the processor 850 may operate in conjunction with software for one or more Al learning models.

In an embodiment, the processor 850 may not only control the movement of the vehicular display device 800 and the screen thereof, but also generate a screen control signal for a rectangular display, namely, the first display 825, in response to the movement and/or the operation of the second display 820.

For example, the processor 850 may control the display of a screen on the rectangular display 825 such that the screen varies depending on whether the second display 820 moves to the driver's (or the center) or the position of the front passenger seat.

In the initial state, the second display 820 may be in a state of being retracted into the cabin within the frame 802, at a position corresponding to the driver's seat (or the center).

In an embodiment, when the ignition of the vehicle 100 is turned on, the second display 820 may move in a direction in which the second display 820 is progressively exposed outward from the slot 801 of the frame 802. A screen of the second display 820 of the vehicular display device 800 may be turned on concurrently with, or after, this operation. At this point, the operation of starting the vehicle 100 may be understood as involving the generation of the second drive signal.

While the vehicle 100 is driven, the second display 820 may move along the slot 801 in the transverse direction of the frame 802 based on the received first signal. In addition, the second display 820 may move back into the internal space of the slot 801 in the longitudinal direction (up-down direction) based on the received second drive signal.

At this point, the first drive signal and the second drive signal may each occur according to preset input methods, such as designated gesture inputs, voice commands, touch inputs to the display unit 820, or different operations for the input device 860.

In an embodiment, when it is recognized that the ignition of the vehicle 100 is turned off or that a parking mode is entered, the second display 820 may return to a preset initial state thereof. For example, in a state where the second display 820 of the vehicular display device 800 is exposed outward from the slot 801, the vehicular display device 800 may move to be retracted into the internal space of the slot 801. In addition, in a state where the second display 820 has moved to the front passenger seat, the second display 820 may move to the position corresponding to the driver's seat (or the center). The screen of the second display 820 of the vehicular display device 800 may be turned off concurrently with, or after, this operation. At this point, an operation of turning off the ignition of the vehicle 100 may cause the generation of the first drive signal and/or the second drive signal, depending on the current position of the second display 820 of the vehicular display device 800.

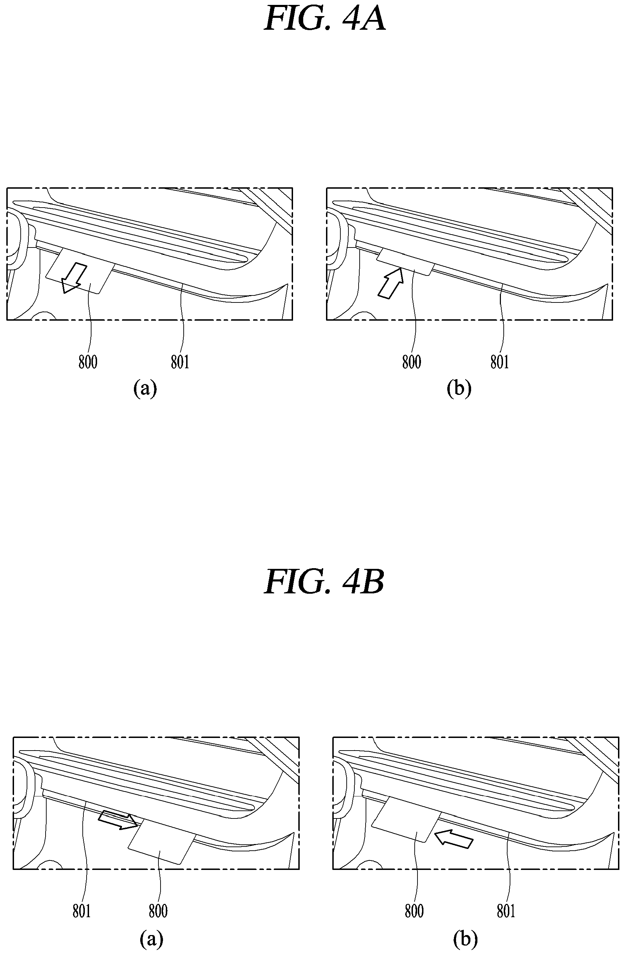

FIGS. 4A and 4B are views that are referenced to describe the movements of the first display 825 and the second display 820 of the vehicular display device 800 according to the embodiment in different directions. At this point, the movements of the first display 825 and the second display 820 of the vehicular display device 800 in different directions refer to the movement of the display unit 820, that is, the second display in a different than the first display 825.

Specifically, FIG. 4A illustrates that the vehicular display device 800 moves in a direction (hereinafter referred to the "second movement direction") in which the vehicular display device 800 is retracted into the internal space of the frame through the slot 801 or ejected outward from the internal space of the frame through slot 801.

FIG. 4B illustrates that the vehicular display device 800 moves along the transverse direction (hereinafter referred to as the "first movement direction") of the slot 801 between the driver's seat (or the center) and the front passenger seat.

First, with reference to FIG. 4B, the vehicular display device 800 moves in the first movement direction along the slot 801 in response to the operation of the first drive module in response to the received first drive signal.

At this point, examples of the first movement direction include the direction of the vehicular display device 800 from the driver's seat (or the center) to the front passenger seat and the direction thereof from the front passenger seat to the driver's seat.

For example, in (a) of FIG. 4B, the vehicular display device 800 may move toward the front passenger seat from the center (or the driver's seat) of the vehicle 100 based on the first drive signal. In addition, for example, in (b) of FIG. 4B, the vehicular display device 800 may move toward the center (or the driver's seat) from the front passenger seat of the vehicle 100 based on the first drive signal.

FIG. 4B illustrates an embodiment in which the vehicular display device 800 moves in the first direction in a state of being exposed outward from the slot 801. However, the vehicular display device 800 may move in the first direction in a state of being retracted into the slot 801.

In this case, one portion of the vehicular display device 800 may move in the state of being exposed outward from the slot 801 such that the movement of the vehicular display device 800 in the first movement direction is recognized from outside. Alternatively, when the vehicular display device 800 moves in the first movement direction in a state of being retracted into the slot 801, LEDs (not illustrated) provided in the vicinity of the slot 801 may blink along the movement direction. Alternatively, while the vehicular display device 800 moves in the first direction in a state of being retracted into the slot 801, an indicator, indicating the movement, may be output on the lower end portion of the rectangular display 825 (in FIG. 3).

Subsequently, with reference to FIG. 4A, in response to the operation of the second drive module according to the received second drive signal, the vehicular display device 800 moves in the second direction.

At this point, examples of the second movement direction include the direction of the retraction of the vehicular display device 800 into the internal space the slot 801 and the direction of the outward ejection thereof from the internal space for exposure.

In (a) of FIG. 4A, the vehicular display device 800 may move toward the front passenger seat from the center (or driver's seat) of the vehicle 100 in the internal space of the slot 801 based on the second drive signal. In addition, for example, in (b) of FIG. 4B, the vehicular display device 800 may move toward the center (or the driver's seat) from the front passenger seat of the vehicle 100 based on the first drive signal.

In an embodiment, the vehicular display device 800 in FIG. 4A may control the driving of the second drive module in response to the second drive signal in such a manner that the second drive module changes from one state to another, either from a retracted state, in which only a first region of the display unit 820 (in FIG. 2) is exposed outward from the slot 801 or from an ejected state, in which the exposed area progressively expands from the first region to a second region.

In response to the second drive signal, one portion of the vehicular display device 800 may be flexibly bent to be exposed outward from the slot 801 or to be retracted into the slot 801.

In response to the second drive signal, when the vehicular display device 800 is exposed outward from the slot 801, a screen of the vehicular display device 800 may be turned on at the corresponding point in time. Subsequently, in response to the second drive signal, when the vehicular display device 800 is retracted into the slot 801, the screen of the vehicular display device 800 may be turned off at the corresponding point in time.

FIG. 4A illustrates an embodiment in which the vehicular display device 800 is exposed outward from the slot 801 or retracted into the slot 801 at a position a corresponding to the driver's seat (or the center). The vehicular display device 800 may also move in the second movement direction to be exposed outward from the slot 801 at a position corresponding to the "front passenger seat."

In an embodiment, the vehicular display device 800 moves independently in the first direction or in the second direction.

For example, the vehicular display device 800 may move sequentially in the first direction and/or the second direction at the points in time when the first drive signal and the second drive signal are received. In addition, for example, in a case where the first drive signal and the second drive signal are received simultaneously, the vehicular display device 800 may move in one direction and subsequently in the other direction, according to a preset reference.

In addition, for example, in a case where the first drive signal and the second drive signal are received simultaneously, the vehicular display device 800 may move to be retracted or to be ejected, in directions corresponding to the first drive signal and the second drive signal. As an example, in the case where the first drive signal and the second drive signal are received simultaneously, the vehicular display device 800 may be retracted into the slot 801 and ejected outward from the slot 801 while moving between the driver's seat (or the center) and the front passenger seat.

In this manner, since the drive modules that move the first display 825 and the second display 820 of the vehicular display device 800 in different directions are provided separately, the first display 825 and the second display 820 of the vehicular display device 800 may be enabled to move in different directions simultaneously.

As illustrated in FIG. 4B, the driving force of the first drive motor included in the first drive module is provided to the first drive module, thereby moving the vehicular display device 800 in the first direction. In addition, as illustrated, the driving force of the second drive motor included in the second drive module is provided to the second drive module, thereby moving the vehicular display device 800 in the second direction.

The vehicular display device 800 receives the first drive signal as a control signal for causing the first drive motor to generating driving force. In addition, the vehicular display device 800 receives the second drive signal as a control signal for causing the second drive motor to generate driving force.

At this point, the first drive signal and the second drive signal may be generated using various methods. For example, a drive signal may be generated which is mapped to at least one of the following input types: a gesture input, a voice command, a touch input to the display of the vehicular display device 800, a button input, or an operation on an operation unit 860.

To this end, data regarding the drive signal mapped to each input may be stored in advance in a memory (not illustrated) of the vehicular display device 800.

In an embodiment, when the drive module operates in a manner that corresponds to the generated drive signal, the movement direction of the vehicular display device 800 in response to the operation of the drive module may be displayed on the display unit of the vehicular display device 800.

For example, while the vehicular display device 800 moves toward the front passenger seat (or the center) in response to the first drive signal, an indicator (e.g., a rightward arrow image), indicating the corresponding movement direction, may be output on the display unit 820 (in FIG. 2).

Alternatively, for example, while the vehicular display device 800 is ejected outward from the slot 801 of the frame in response to the second drive signal, an indication (e.g., a downward arrow image), indicating the corresponding movement direction, may be displayed on the lower end portion of a rectangular display, namely, the first display 825, which is mounted on the frame.

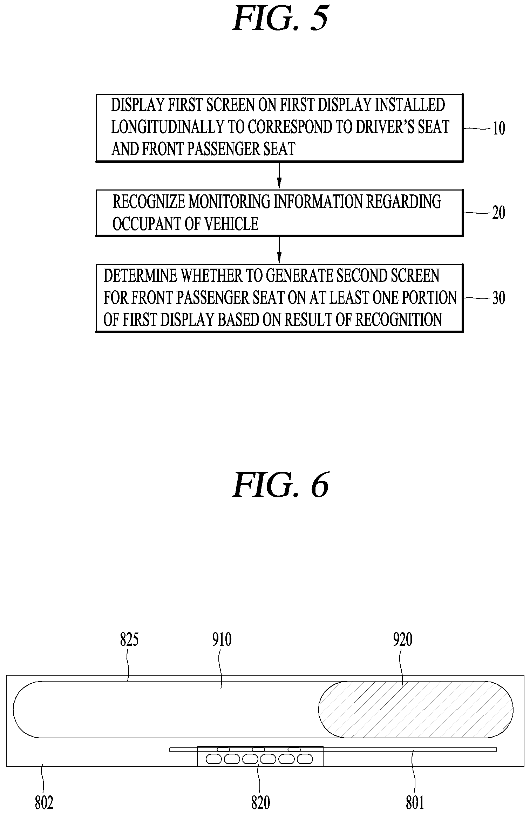

With reference to FIG. 5, a method, according to an embodiment of the present disclosure, of performing screen control of the vehicular display device 800 depending on whether the front passenger seat is detected will be described in detail below.

The vehicular display device 800 according to an embodiment of the present disclosure includes a display unit, namely, the second display 820, which is formed to be movable in a direction different than the first display 825 being installed in the front seat of the vehicle in such a manner that extends longitudinally over a long distance. In addition, unless otherwise described, each operation illustrated in FIG. 5 may be performed by the control unit 850 of the vehicular display device 800.

The vehicular display device 800 may receive, through the communication unit 810, a monitoring result generated by the operation of a passenger monitoring system within the vehicle 100, for example, the operation of the DMS 110.

When the vehicular display device 800 is activated, a first screen is displayed on the first display 825, which is installed over a long distance in the longitudinal direction in such a manner as to correspond to the driver's seat and the front passenger seat (S10).

At this point, the first screen may include a cluster screen, including vehicle state information, and/or a screen for the driver, for example, a navigation screen. In this case, the first screen may be displayed on the entire first display 825.

A condition for the first screen to be displayed on the first display 825 may be that the ignition of the vehicle 100, with which the first display 825 operates in conjunction, is turned on. However, the turned-on state of the ignition of the vehicle 100 may be a starting condition for activating the first display 825, but not a condition for maintaining the activation of the first display 825. Alternatively, even after the ignition of the vehicle 100 is turned off, the activation of the first display 825 and the display of the first screen may also be maintained for a predetermined period of time.

Subsequently, the vehicular display device 800 may detect the presence or absence of an occupant in the front passenger seat by receiving, through a reception unit, monitoring information from the DMS 110 of the vehicle 100, for example, DMS sensing data (S20).

At this point, the driver monitoring system (DMS) may recognize the presence of the driver or another occupant through a camera mounted on a dashboard within the vehicle 100 and may further recognize emotional states, attentive states, and similar conditions of the recognized driver and occupant through his/her facial expression.

The vehicular display device 800 receives the monitoring information from the DMS 110 of the vehicle in real time or at periodic intervals, thereby enabling the vehicular display device 800 to recognize the presence of occupants in the driver's seat and the front passenger seat and their behaviors and emotional states.

For example, the vehicular display device 800 may detect the presence or absence of the occupant in the front passenger seat on the basis of the sensing data from the DMS of the vehicle 100. In addition, after the occupant in the front passenger seat is detected, the vehicular display device 800 may determine, on the basis of the subsequently received DMS sensing data, that a behavioral state of the occupant in the front passenger seat has changed or that the occupant in the front passenger seat is no longer detected.

Next, the vehicular display device 800 may generate a second screen for the passenger in the front passenger seat on at least one portion of the first display 825 based on the result of recognizing the occupant in the front passenger seat (S30).

At this point, the second screen may include infotainment independently controllable screens for the occupant in the front passenger seat. For example, the second screen may include various screens for the occupant in the front passenger seat, such as a navigation screen, a menu screen, and various entertainment screens, these screens being distinguishable from those for the driver's seat.

In addition, at this point, generating the second screen on the first display 825 refers to displaying a screen for the occupant in the front passenger seat at a position corresponding to the front passenger seat, the screen being distinguishable from the first screen. Therefore, a screen of the first display 825 now switches from a split mode to a full mode, thereby enabling the first screen and the second screen to be displayed in a distinguishable manner.

That is, when the occupant in the front passenger seat of the vehicle 100 is detected, the screen of the first display 825 is split into the first screen of the driver and the second screen for the occupant in the front passenger seat without requiring a manual operation from the occupant in the front passenger seat or the driver. Accordingly, a high level of user experience that better meets user needs is provided.

In an embodiment, when the occupant in the front passenger seat is no longer detected on the basis of the subsequently received DMS sensing data, a screen mode of the first display 825 may return to the full mode. That is, it is determined that the second screen for the occupant in the front passenger seat is no longer necessary, and only the first screen (e.g., a cluster screen and a navigation screen for the driver) may be displayed again on the entire first display 825.

In this manner, when a large-sized screen, namely, the first display 825, which is installed on the front seat of the vehicle 100, recognizes the presence of the occupant in the front passenger seat, the vehicular display device 800 according to the present disclosure operates to automatically generate and provide a screen for the occupant in the front passenger seat. Accordingly, a desired service may be immediately provided to the driver or the occupant in the front passenger seat without requiring additional user input.

FIG. 6 is a view illustrating that the screen of the first display 825 of the vehicular display device 800 is provided in the split mode based on the detection of the occupant in the front passenger seat of the vehicle 100.

In an embodiment, the control unit 850 of the vehicular display device 800 may execute an occupant-triggered execution mode based on the recognition of the presence of the occupant in the front passenger seat using the sensing data from the DMS of the vehicle 100. When the occupant-triggered execution mode is executed, the screen of the first display 825 switches from the full mode to the split mode, and the second screen for the occupant in the front passenger seat is generated at the position corresponding to the front passenger seat of the vehicle.

At this point, a display region of the first screen displayed on the first display 825 is reduced to the remaining region, excluding a region of the second screen.

With reference to FIG. 6, when first display 825 of the vehicular display device 800 operates in the split mode, a first screen 910 for the driver, for example, a navigation screen for driving, is displayed in the left region and the center region, and a second screen 920 for the occupant in the front passenger seat, for example, a menu screen for execution of infotainment is displayed on the right region corresponding to the front passenger seat.

At this point, as illustrated in FIG. 6, the second display 820, which is configured to be movable, may be in a state of being retracted into the internal space of the frame 802.

Alternatively, in another embodiment, when an interaction by the occupant in the front passenger with the second screen displayed on the first display 825 is detected, the second display 820 may be ejected outward from the frame 802 through the slot 801 formed in the frame 802 and may move toward the position corresponding to the front passenger seat. Accordingly, user convenience may be provided such that the occupant in the front passenger seat is enabled to control the second screen of the first display 825 using the second display 820.

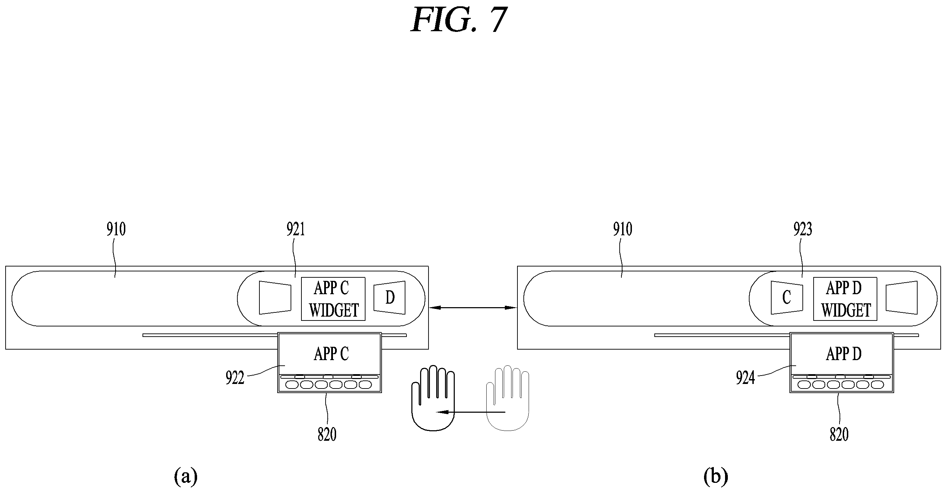

In this regard, FIG. 7 is a view illustrating that the occupant in the front passenger seat controls the screen of the first display 825 using the second display 820 while the screen of the first display 825 is displayed in the split mode.

In an embodiment, a different control screen or execution screen may be displayed on the second display 820 of the vehicular display device 800, depending on whether the second screen is generated on the first display 820.

Specifically, the control unit 850 of the vehicular display device 800 may determine a screen control target of the first display 825, the screen control target corresponding to an input to the second display 820, in a manner that varies depending on whether the occupant in the front passenger seat is recognized.

For example, the control unit 850 may generate a control signal by mapping screen control, corresponding to the input to the second display 820, to the second screen of the first display 825, based on the recognition of the presence of the occupant in the front passenger seat. Alternatively, for example, the control unit 850 may provide a control signal by mapping the screen control, corresponding to the input to the second display 820, to the first screen of the first display 825, based on the recognition of the absence of the occupant in the front passenger seat.

With reference to FIG. 7, in a case where the first display 825 is split into the first screen 910 for the driver and the second screen 920 for the occupant in the front passenger seat as a result of the detection of the occupant in the front passenger seat, the occupant in the front passenger seat may attempt to interact with the second screen 920.

When an attempt to interaction with the second screen 920 is detected, the vehicular display device 800 operates the plurality of drive units 830 in order to move the second display 820, configured to be movable, to the position corresponding to the front passenger seat.

As illustrated in (a) of FIG. 7, when the second display 820 moves to the position corresponding to the front passenger seat, the second screen 920 for the occupant in the front passenger seat, the second screen 920 being displayed on the first display 825, for example, a control screen or execution screen 922 for an application execution menu screen, is now displayed on the second display 820.

Accordingly, as illustrated (b) of FIG. 7, the occupant in the front passenger seat may control the second screen of the first display 825 through a touch input to the second display 922. For example, on the basis of a swiping touch input in the transverse direction to the current control screen or execution screen 922 of the second display 820, a menu screen 923, resulting from making a change to position an application "D" at the center thereof, is controlled to be displayed on the second screen of the first display 825.

In this case, a control screen or execution screen 924 for an application "D" is adaptively displayed on the second display 820. At this point, detailed information or execution information about the selectable application "D" may be included in the control screen or execution screen 924.

As described above, the vehicular display unit 800 may generate the second screen for the occupant in the front passenger seat on the first display by detecting the occupant in the front passenger seat of the vehicle, and may enable the occupant in the front passenger seat to control the second screen through the second display configured to be movable.

Even after the second screen for the occupant in the front passenger seat is generated on the first display 825, the vehicular display device 800 may update information about the presence or absence of the occupant in the front passenger seat or the state of the occupant on the basis of the sensing data received from the DMS of the vehicle 100.

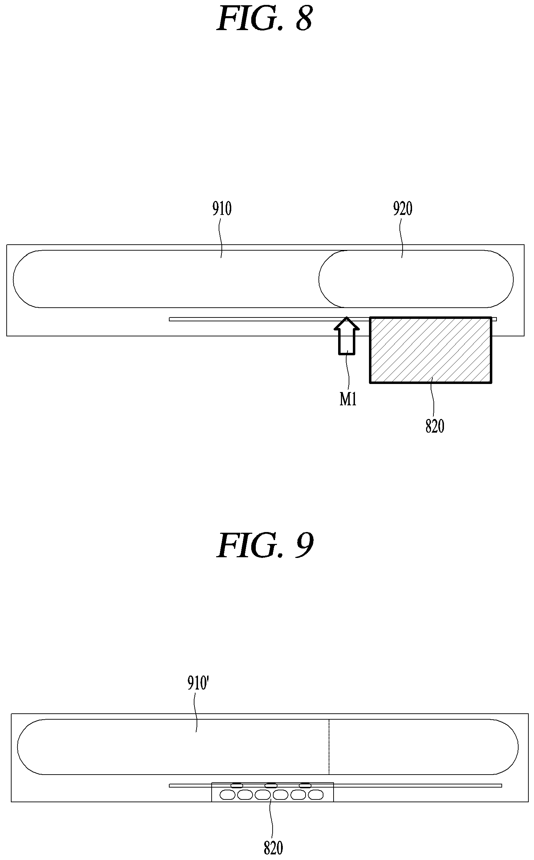

In this regard, FIGS. 8 and 9 are views, each illustrating that, after the second screen is generated on the first display 825, the second display 820 moves based on non-recognition of the occupant in the front passenger seat or recognition of a drowsy state of the occupant.

In an embodiment, the vehicular display device 800 may control the plurality of drive units 830, depending on whether the occupant in the front passenger seat is detected, in such a manner that the second display 820 is driven in a predetermined direction. For example, when the occupant in the front passenger seat is no longer detected on the basis of the DMS sensing data, the control unit 850 of the vehicular display device 800 may operate the first and second drive modules 830a and 830b in such a manner that the second display 820 returns to the initial position and state thereof.

In addition, in an embodiment, depending on whether the occupant in the front passenger seat is detected, the control unit 850 of the vehicular display device 800 may perform control in such a manner that the second display 820 is driven in a predetermined direction and, at the same time or subsequently, the screen mode of the first display 825 switches back to the full mode. For example, when the occupant in the front passenger seat is no longer detected on the basis of the DMS sensing data, the control unit 850 of the vehicular display device 800 may perform screen control in such a manner that the second display 820 returns to the initial position and state thereof and, at the same time or subsequently, the second screen generated on the first display 825 disappears.

At this point, the case where the occupant in the front passenger seat is no longer detected on the basis of the DMS sensing data includes not only a case where the occupant in the front passenger seat is absent, but also a case where the second screen of the first display 825 is estimated not to be used.

For example, when the occupant in the front passenger seat is detected as having reclined the seat and closed his/her eyes, the drowsy state may be recognized through the DMS sensing data, and it may be determined, after a predetermined period of time has elapsed, that the occupant in the front passenger seat is no longer detected.

In this case, the screen of the first display 825 progressively switches from the split mode to the full mode.

At this point, the gradual switching of the screen of the first display 825 to the full mode, for example, may include seamless switching from the second screen to one portion of the first screen. Alternatively, the gradual switching of the screen of the first display 825 to the full mode, for example, may include switching from the second screen to one portion of the first screen after a predetermined period of time while the brightness of the second screen is progressively decreased. At this point, audio for the second screen continues for a predetermined period of time. Accordingly, in a case where the occupant in the front passenger seat subsequently interacts with the second screen, the first display 825 may be controlled to immediately display the second screen.

With reference to FIGS. 8 and 9, in a state where the second screen 920 for the occupant in the front passenger seat is displayed on the first display 825 and where a control screen or execution screen corresponding to the second screen 920 is displayed on the second display 820, the vehicular display device 800 may recognize, on the basis of the sensing data from the DMS of the vehicle, that the occupant in the front passenger seat is no longer detected.

For example, when it is recognized, through a camera within the vehicle, that the occupant in the front passenger seat remains motionless or is in a state of sleep for a predetermined period of time (e.g., persistent eye closure), the vehicular display device 800 may determine that the occupant in the front passenger seat does not intend to use the second display 820 and may control the drive module in such a manner that the second display 820 is retracted into the internal space of the frame.

For example, as illustrated in FIG. 8, while the second screen 920 is still being displayed on the first display 825, the second display 820 may operate to retract itself in a direction M1 corresponding to the inner space of the frame. To this end, a control signal for operating the second drive module 830b of the vehicular display device 800 in such a manner as to correspond to the direction M1 is generated. Before the second display 820 is retracted, the screen of the second display 820 switches to a deactivated state.

Subsequently, as illustrated in FIG. 9, the control unit 850 operates the first drive module 830a in such a manner that the second display 825 returns to the initial position thereof, namely, the position corresponding to the driver's seat (or the center).

The sequence of the operations of the first and second drive modules 830a and 830b may vary. For example, in response to the operation of the first drive module 830a, the second display 820 may move to the initial position thereof in an exposed state, and then the second drive module 803b may also operate in such a manner that the second display 820 is retracted. Alternatively, the first and second drive modules 830a and 830b may also operate simultaneously.

In this manner, while the second display 825 returns to the initial position thereof, the screen mode of the first display 825 switches to the full mode. Accordingly, an expanded first screen 910' is displayed on the first display 820.

As another embodiment, the occupant-triggered execution mode of the first display 825 may be intentionally deactivated on the basis of an input to the vehicular display device 800. In this case, the second display 820 may be used to control the first screen of the first display 825, rather than to be retracted.

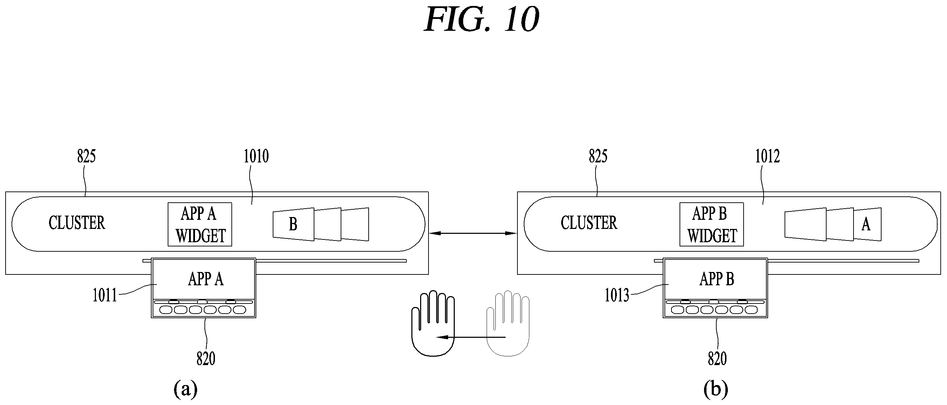

In this regard, FIG. 10 is a view illustrating that the driver controls the screen of the first display 825 using the second display 820.

While the first display 825 is used in the full mode, a first screen 1010 for the driver is displayed on the entire first display 825. A cluster screen associated with the vehicle's driven state is included in the first screen 1010. At this point, the driver may interact with the first screen 1010 using the exposed second display 820.

For example, with reference to FIG. 10, the second display 820 is positioned at the driver's seat (or the center) in an exposed state, and a control screen or execution screen 1011, associated with the widget screen "App A" displayed in the middle of the first display 825 operating in a full screen mode, is displayed.

Rather than directly interacting with the first display 825, the driver may control the screen of the first display 825 using the second display 820 which is closer to the driver's seat.

For example, a first screen 1012 is displayed. The first screen 1012 is screen-controlled in such a manner that a widget screen, displayed in the middle of the first display 825, as illustrated in (b) of FIG. 10, is changed to the widget screen "App B" through a touch input to the control screen or execution screen 1011 of the second display 820, as illustrated in (a) of FIG. 10, for example, through a sliding touch input in the transverse direction. In this case, the screen of the second display 820 switches to a control screen or execution screen 1013 associated with the screen-controlled first screen 1012.

As described above, when it is determined that the occupant in the front passenger seat is no longer detected, the vehicular display device 800 according to the embodiment of the present disclosure may enable the second display to operate to retract itself or may operate in such a manner that the second display is used for screen control of the first display. Accordingly, the second display is sufficiently utilized not only for the occupant in the front passenger seat but also for the driver, thereby further enhancing the usability thereof.

The method of performing screen control of the first display in response to the detection of the occupant in the front passenger seat of the vehicle has been described in detail above. Embodiments of a method of controlling the movement of the second display in response to the detection of the occupant in the front passenger seat of the vehicle will be described below.

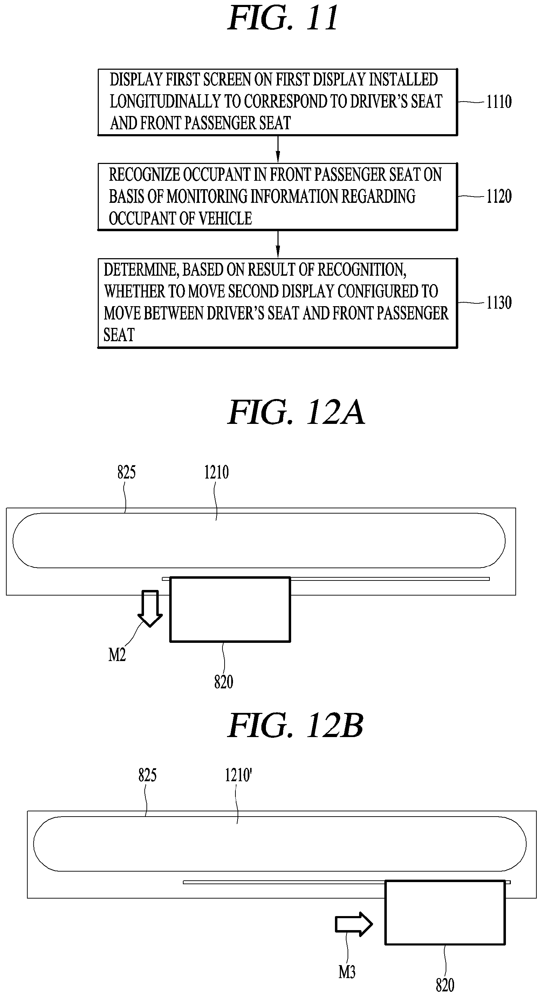

FIG. 11 is a flowchart that is referenced to describe a method of moving the vehicular display device depending on whether the occupant in the front passenger seat is detected.

In addition, FIGS. 12A and 12B are conceptual diagrams that are referenced to describe in detail the method of moving the vehicular display device.

First, with reference to FIG. 11, the vehicular display device 800 according to the embodiment of the present disclosure includes the first display 825 installed to extend longitudinally in such a manner as to correspond to the driver's seat and the front passenger seat, and the second display 820 configured to move between the driver's seat and the front passenger seat. In addition, unless otherwise described, each operation illustrated FIG. 11 may be performed by the control unit 850 of the vehicular display device 800.

First, when the vehicular display device 800 is activated, the first screen is displayed on the first display 825 (S1110). At this point, the activation of the vehicular display device 800 may be communicatively connected to the DMS of the vehicle 100 based on the turned-on state of the ignition of the vehicle.

Subsequently, the vehicular display device 800 may receive, through the communication unit 810, the monitoring result generated by the operation of the DMS 110 of the vehicle. Moreover, the vehicular display device 800 may recognize, on the basis of the sensing data received from the DMS 110, whether the occupant in the front passenger seat is present (S1120).

When an occupant is seated in the front passenger seat, it may be recognized, using a weight sensor, whether the occupant is present in the front passenger seat. However, it can be said that recognizing the presence or absence of the occupant in the front passenger seat using the sensing data from the DMS 110 includes monitoring whether the occupant in the front passenger seat requires the use of the first display 825.

For example, the vehicular display device 800 may recognize, on the basis of monitoring information about the occupant of the vehicle, that the occupant is present in the front passenger seat. In addition, for example, the vehicular display device 800 may recognize, on the basis of the sensing data from the DMS 110 that the occupant in the front passenger seat is no longer detected. In addition, for example, the vehicular display device 800 may recognize, on the basis of the sensing data from the DMS 110, whether the occupant in the front passenger seat is, for example, in a drowsy state.

In an embodiment, in Step S1120, monitoring the presence and state of the occupant in the front passenger seat on the basis of the DMS sensing data may require, as starting and maintenance conditions, that at least the first display 825 be activated and the first screen be displayed.

Next, the vehicular display device 800 may determine, based on the result of recognizing the occupant in the front passenger seat, whether to move the second display 820, which is configured to move between the driver's seat and the front passenger seat (S1130).

Specifically, when the occupant in the front passenger seat is detected on the basis of the DMS sensing data, the vehicular display device 800 may execute the occupant-triggered execution mode. Conversely, when the occupant in the front passenger seat is not detected, the vehicular display device 800 may execute a driver-triggered execution mode.

When the occupant-triggered execution mode is executed, the control unit 850 of the vehicular display device 800 may operate the first drive module 830a in such a manner that the second display 820 moves to the position corresponding to the front passenger seat. At this point, when the second display 820 is in a state of being retracted into the internal space of the frame 802, the second drive module 830b may operate to enable the second display 820 to additionally move to be exposed outward from the frame 802.

FIGS. 12A and 12B illustrate that, while the first screen 1210 is displayed on the first display 825 of the vehicular display device 800, the second display 820 moves in response to the detection of the presence of the occupant in the front passenger seat on the basis of the DMS sensing data.

First, the second drive module 830b operates to enable the second display 820 to move in a direction M2 to be ejected outward through the slot formed in the frame.

Then, the first drive module 830a operates to enable the second display 820 to move in a transverse direction M3 along the slot toward the front passenger seat. Moreover, a preparation screen 1210' for switching the screen mode of the first display 825 to the split mode, for example, a modified first screen, may be displayed.

At this point, the control unit 850 of the vehicular display device 800 can operate the first and second drive modules (830a, 830b) in a different order than mentioned above. For example, the first drive module 830a may operate to move the second display 820 in a retracted state, in the transverse direction M3, and then the second drive module 830b may operate. Alternatively, the first and second drive modules 830a and 830b may also operate simultaneously.

In the driver-triggered execution mode, the control unit 850 of the vehicular display device 800 may or may not operate the plurality of drive units 830 in such a manner that the second display 820 is positioned at the position corresponding to the driver's seat (or the center). That is, in a case where the second display 820 is positioned at the position corresponding to the driver's drive (or the center), that is, the initial position thereof, it is determined that the second display 820 does not move. In contrast, in a case where a switch from the occupant-triggered execution mode to the driver-triggered execution mode occurs in a state where the second display 820 is positioned at the position corresponding to the front passenger seat, it is determined that the second display 820 is required to move to the initial position thereof, and the driving of at least the first drive module 830a may be controlled.

In some embodiments, the vehicular display device 800 may be controlled to move only the second display 820 based on the recognition of the occupant in the front passenger seat. In this case, after the second display 820 moves to the position of the front passenger seat, when it is determined that the occupant intends to use the first display 825, the vehicular display device 800 may operate in such a manner that the second screen for the occupant in the front passenger seat is displayed on the first display 825.

At this point, the intention of the occupant in the front passenger seat to use the first display 825 may, for example, refer to an input to one region of the first display 825 (e.g., a display region corresponding to the front passenger seat) or an input to the moved second display 820.

As described above, the vehicular display device 800 according to the embodiment of the present disclosure is configured in such a manner that, when the presence of the occupant in the front passenger seat is detected, the second display automatically moves toward the front passenger seat to enable easy control of the screen for the occupant in the front passenger seat. Accordingly, the second display may be used to control the screen of the first display without requiring an additional operation from the occupant in the front passenger seat, thereby providing a more convenient user experience and further enhancing the usability of the second display.

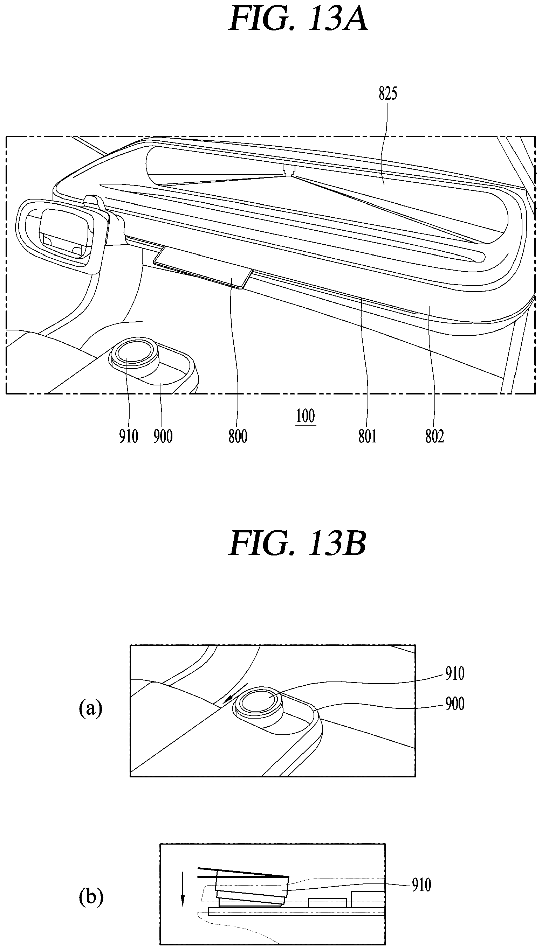

FIG. 13A is a conceptual diagram that is referenced to describe a console 900 for controlling the display or movement of the vehicular display device 800 according to the embodiment of the present disclosure. FIGS. 13B to 13E are conceptual diagrams that are referenced to describe the operation of an associated console.

In the present specification, the console 900 used refers to a control unit or input device for operating the vehicular display device 800.

In an embodiment, the console 900 illustrated in FIG. 13A can be understood as being the same as the input device 860 in FIG. 2. In this case, the console 900 may be understood as being integrated with the vehicular display device 800.

In addition, in another embodiment, the console 900 may also be understood as being a separate input device distinct from the vehicular display device 800. In this case, the vehicular display device 800 may be communicatively connected to the console 900 in a powered-on state through a wired or wireless connection.

The console 900, as illustrated in FIG. 13A, may be positioned between the driver's front seat of the vehicle 100 and the front passenger seat. Accordingly, both the driver seated in the driver's seat and the occupant seated in the front passenger seat can easily operate the console 900 without changing their seated postures.

The console 900 may include an operation unit 910 that is formed to move and/or tilt within the frame. In addition, although not illustrated, the console 900 may include a sensor for detecting the movement and/or tilting of the operation unit 910. In addition, the console 900 may include a processor (not illustrated) for generating a signal corresponding to the sensing value obtained by detection and transferring the generated signal to the vehicular display device 800, and a communication module (not illustrated).

A signal that varies according to the movement direction of the operation unit 910 may be transferred from the console 900 to the vehicular display device 800.

For example, as the operation unit 910 moves in a direction from the driver's seat (or the center) toward the front passenger seat, a first drive signal for moving the vehicular display device 800 from the driver's seat (or the center) to the front passenger seat may be generated. Then, the vehicular display device 800 may move toward the front passenger seat along the transverse direction of the slot 801 of the frame 802 on the basis of the first drive signal.

In addition, for example, as the operation unit 910 moves in a direction from the front passenger seat to the driver's seat (or the center), a second drive signal for moving the vehicular display device 800 from the front passenger seat to the driver's seat (or the center) may be generated. Then, the vehicular display device 800 may move toward the driver's seat (or the center) along the transverse direction of the slot 801 of the frame 802 on the basis of the second drive signal.

A signal that varies according to the tilting direction of the operation unit 910 may be transferred from the console 900 to the vehicular display device 800.

For example, as the operation unit 910 tilts downward (or toward the rear seat of the vehicle 100), a second drive signal for ejecting the vehicular display device 800 outward from the internal space of the frame 802 through the slot 801 may be generated. Then, the vehicular display device 800 is progressively ejected outward through the slot 801 of the frame 802 on the basis of the second drive signal.

In addition, for example, as the operation unit 910 tilts upward (or toward the HUD in front of the front seat of the vehicle 100), a second drive signal for moving the vehicular display device 800 for retraction into the internal space of the frame 802 may be generated. Then, the vehicular display device 800 is progressively retracted into the internal space of the frame 802 through the slot 801 of the frame 802 on the basis of the second drive signal.

The vehicular display device 800 may receive, from the console 900 through the communication unit 810, a signal that results from an operation on the console 900.

Specifically, the vehicular display device 800 generates the first drive signal based on a first signal that results from a first operation on the console 900, and controls the operation of the first drive module 830a based on the generated first drive signal, thereby moving the vehicular display device 800 in the first movement direction.

At this point, the first signal, which results from the first operation on the console 900, is a signal for triggering the movement in the transverse direction of the vehicular display device 800 along the slot 801 with respect to the frame 802. In addition, the generated first drive signal triggers the operation of the first drive module 830a in such a manner that the vehicular display device 800 moves along the slot 801 in the transverse direction. Accordingly, the vehicular display device 800 moves between the driver's seat (or the center) and the front passenger seat in the first movement direction.

The vehicular display device 800 generates the second drive signal based on a second signal that results from a second operation on the console 900, and controls the operation of the second drive module 830b based on the generated second drive signal, thereby moving the vehicular display device 800 in the second movement direction.

At this point, the second signal, which results from the second operation on the console 900, is a signal for triggering either the ejection of the vehicular display device 800 from the slot 801 with respect to the frame 802 or the retraction thereof into the internal space along the slot 801 (that is, the movement thereof in the longitudinal direction). In addition, the generated second drive signal triggers the operation of the second drive module 830b in such a manner that the vehicular display device 800 is retracted into the internal space of the slot 801 or ejected outward therefrom. Accordingly, the vehicular display device 800 moves in the second movement direction to be ejected outward from the slot 802 or retracted into the internal space of the slot 802.

As described above, the first and second drive signals for moving the first display 825 and the second display 820 of the vehicular display device 800 in different directions may be generated using various input methods. A specific method of controlling the movement of the vehicular display device 800 by generating the first drive signal and the second drive signal on the basis of an operation on the console 900 will be described below.

FIGS. 13B to 13E are conceptual diagrams that are referenced to describe the movements of the first display 825 and the second display 820 of the vehicular display device 800 in different directions, namely, the vertical direction or the horizontal direction, in response to various operations on the console 900.

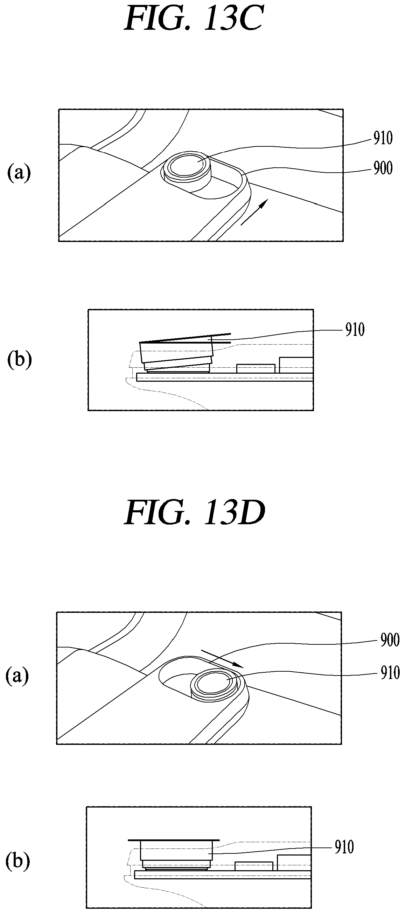

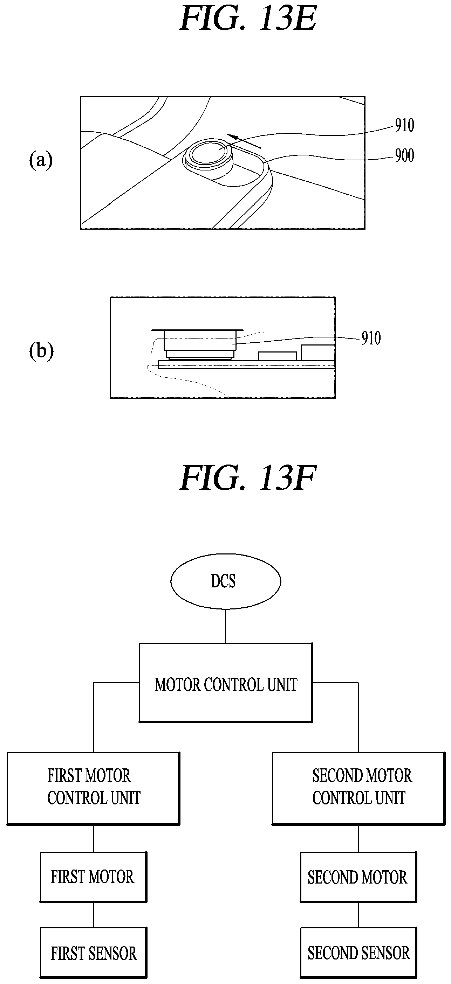

Specifically, FIGS. 13D and 13E illustrate that the first drive signal for moving the vehicular display device 800 in the first movement direction is generated on the basis of the first signal that results from the first operation on the console 900. At this point, the movement of the vehicular display device 800 in the first direction refers to the movement of the vehicular display device 800 between the driver's seat (or the center) and the front passenger seat within the vehicle 100..

Moreover, FIGS. 13B and 13C illustrate that the second drive signal for moving the vehicular display device 800 in the second movement direction is generated on the basis of the second signal that results from the second operation on the console 900. At this point, the movement of the vehicular display device 800 in the second direction refers to the retraction of the vehicular display device 800 into the internal space of the frame or the outward exposure of the vehicular display device 800 from the internal space thereof.

The console 900 may be used as an operation unit or an input device for controlling the movement of the vehicular display device 800 as described in FIGS. 13B to 13E.

When the vehicular display device 800 is in an activated state, the console 900 may be communicatively connected and may receive a signal corresponding to an input to the operation unit 910 of the console 900. At least one of the plurality of drive units 830 operates on the basis of the received signal and enables the vehicular display device 800 to move in a direction mapped to the input.

When the vehicular display device 800 is in a deactivated state, the console 900 may be disconnected from the vehicular display device 800 and may switch to a state where the signal corresponding to the input to the operation unit 910 of the console 900 cannot be received.

The console 900, as illustrated in FIGS. 13B to 13E, includes the operation unit 910 which is formed to move or tilt in the left-right direction and the up-down direction within a stationary frame.

In an embodiment, the stationary frame may have an elliptical shape that extends over a long distance in the transverse direction. The operation unit 910 positioned within the stationary frame may have a circular shape. Specifically, the stationary frame may have a horizontal length greater than the operation unit 910 in such a manner that the operation unit 910 is movable in the horizontal direction. The stationary frame may be formed in such a manner that the longitudinal length thereof is substantially the same as that of the operation unit 910, thereby enabling the operation unit 910 to tilt only in the vertical direction.

The operation unit 910 may be referred to as a "movable frame" in that the operation unit 910 is formed to be movable with respect to the stationary frame. In addition, the operation unit 910 may be referred to as a "controller" in that the operation unit 910 is a module formed to be tiltable in response to a user input. The terms "operation unit 910," "movable frame," and "controller" may all be used hereinafter interchangeably to refer to the same structural component.

A specific method of generating the first drive signal for moving the vehicular display device 800 on the basis of the first signal that results from the first operation on the console 900 will be described below with reference to FIGS. 13D and 13E.

With reference to FIGS. 13D to 13E, the console 900 positioned between the driver's seat and the front passenger seat within the vehicle 100 may detect the first operation in which the operation unit 910 within the stationary frame moves in the left-right direction or tilts, and thus may generate the first signal that results from the first operation.

Specifically, with reference to FIG. 13D, the movable frame 910 of the console 900 may initially move to the position corresponding to the front passenger seat in a state of being fixed at the position corresponding to the driver's seat (or the center) within the stationary frame.

Based on the movement of the movable frame 910 to the position corresponding to the front passenger seat in response to the user input (in (a) of FIG. 13D), a sensor (not illustrated) provided on the console 900 may detect a change in the position of the movable frame 910. At this point, the movable frame 910 remains horizontally aligned without tilting in the up-down direction (in (b) of FIG. 13D). Accordingly, the sensor on the console 900 generates a first tilt signal that is mapped to the movement of the movable frame 910 that moves or tilts only in the right direction. The generated first tilting signal is transferred to the vehicular display device 800 through the communication module. When the first tilt signal is transferred to the control unit 850 through the communication unit 810 of the vehicular display device 800, the first drive signal corresponding to the first tilt signal is generated. The control unit 850 transfers the generated first drive signal to the first drive module 830a. At this point, the first drive signal corresponding to the first tilt signal includes detailed direction information, thereby determining the driving direction of a motor of the first drive module 830a. In response to this operation of the first drive module 830a, the vehicular display device 800 moves in the horizontal direction toward the front passenger seat along the slot 801 of the frame 802 (in FIG. 13D).

With reference to FIG. 13E, the movable frame 910 of the console 900 may move to the position corresponding to the driver's seat (or the center) in a state of being fixed at the position corresponding to the front passenger seat within the stationary frame.

Based on the movement of the movable frame 910 to the position corresponding to the driver's seat (or the center) in response to a user operation input (in (a) of FIG. 13E), the sensor (not illustrated) provided on the console 900 may detect a change in the position of the movable frame 910. At this point, the movable frame 910 remains horizontally aligned without tilting in the up-down direction (in (b) of FIG. 13E). Accordingly, the sensor on the console 900 generates a second tilt signal that is mapped to the movement of the movable frame 910 that moves or tilts only in the left direction. The generated second tilt signal is transferred to the vehicular display device 800 through the communication module. When the second tilt signal is transferred to the control unit 850 through the communication unit 810 of the vehicular display device 800, the second drive signal corresponding to the second tilt signal is generated. The control unit 850 transfers the generated first drive signal to the first drive module 830a. At this point, the first drive signal corresponding to the second tilt signal includes detailed direction information, thereby determining the driving direction of the motor of the first drive module 830a. In response to this operation of the first drive module 830a, the vehicular display device 800 moves in the horizontal direction toward the driver's seat (or the center) along the slot 801 of the frame 802 (in FIG. 13E).

A specific method of generating the second drive signal for moving the vehicular display device 800 on the basis of the second signal that results from the second operation on the console 900 will be described below with reference to FIGS. 13B and 13C.

With reference to FIGS. 13B to 13C, the console 900 positioned between the driver's seat and the front passenger seat within the vehicle 100 may detect the second operation in which the upper or lower portion of the operation unit 910 within the stationary frame tilts, and thus may generate the second signal that results from the detected second operation.

Specifically, with reference to FIG. 13B, in a state where the movable frame 910 of the console 900 is fixed at the position corresponding to the driver's seat (or the center) or the front passenger seat within the stationary frame, the lower portion of the movable frame 910 may tilt.

Based on the tilt of the lower portion of the movable frame 910 in response to this user operation input (in (a) of FIG. 13E), the sensor (not illustrated) provided on the console 900 may detect a change in the position of the movable frame 910. At this point, the movable frame 910 does not move in the left-right direction, and the lower portion of the mobile frame 910 tilts in the vertical direction (in (b) of FIG. 13E). When the lower portion of the movable frame 910 tilts, a change in angle (e.g., 10 degrees or more) may be detected through the sensor (not illustrated) on the movable frame 910. The console 900 generates a third tilt signal that is mapped to the movement of the tilted movable frame 910. The generated third tilt signal is transferred to the vehicular display device 800 through the communication module. When the third tilt signal is transferred to the control unit 850 through the communication unit 810 of the vehicular display device 800, the second drive signal, corresponding to the third tilt signal, is generated. The control unit 850 transfers the generated second drive signal to the second drive module 830b. At this point, the second drive signal, corresponding to the third tilt signal, includes detailed direction information, and accordingly, the driving direction of a motor of the second drive module 830b is determined. In response to this operation of the second drive module 830b, the vehicular display device 800 is ejected outward from the internal space of the frame 802 along the slot 801 of the frame 802 of the vehicle (in FIG. 13E).

With reference to FIG. 13C, in a state where the movable frame 910 of the console 900 is fixed at the position corresponding to the driver's seat (or the center) or the front passenger seat within the stationary frame, the lower portion of the movable frame 910 may tilt.

Based on the tilt of the upper portion of the movable frame 910 in response to this user operation input (in (a) of FIG. 13C), the sensor (not illustrated) provided on the console 900 may detect a change in the position of the movable frame 910. At this point, the movable frame 910 did not move in the left-right direction, and only the upper portion of the movable frame 910 tilts in the vertical direction (in (b) of FIG. 13C). As the upper portion of the moving frame 910 tilts, a change in angle (e.g., 10 degrees or greater) may be detected through the sensor (not illustrated) on the moving frame 910. The console 900 may generate a fourth tilt signal that is mapped to the movement of the tilted movable frame 910. The generated fourth tilt signal is transferred to the vehicular display device 800 through the communication module. When the fourth tilt signal is transferred to the control unit 850 through the communication unit 810 of the vehicular display device 800, the second drive signal, corresponding to the fourth tilt signal, is generated. The control unit 850 transfers the generated second drive signal to the second drive module 830b. At this point, the second drive signal, corresponding to the fourth tilt signal, includes detailed direction information, and accordingly, the driving direction of the motor of the second drive module 830b is determined. In response to this operation of the second drive module 830b, the vehicular display device 800 is progressively retracted into the internal space of the frame 802 through the slot 801 of the frame 802 of the vehicle (in FIG. 13C).

In a case where it is unclear whether the upper or lower portion of the movable frame 910 tilts, the console 900 may generate the third tilt signal or the fourth tilt signal on the basis of a difference in the angle of the movable frame 910, caused by the tilting.

For example, in a case where the lower portion of the movable frame 910 of the console 900 undergoes a greater change in the angle, the third tilt signal for ejecting the vehicular display device 800 outward from the frame 802 may be generated. Furthermore, for example, when the upper portion of the movable frame 910 of the console 900 undergoes a greater changing in the angle, the fourth tilt signal for retracting the vehicular display device 800 into the internal space of the frame 802.

In this manner, the first drive signal and the second drive signal, which are generated by the vehicular display device 800, are determined according to the direction of movement or tilt force applied to the movable frame 910 of the console 900 or the controller.

The vehicular display device 800 determines the driving direction of the first drive module 830a corresponding to the first drive signal and/or the driving direction of the second drive module 830b corresponding to the second drive signal, based on direction information corresponding to each tilt in response to an operation on the console 900.

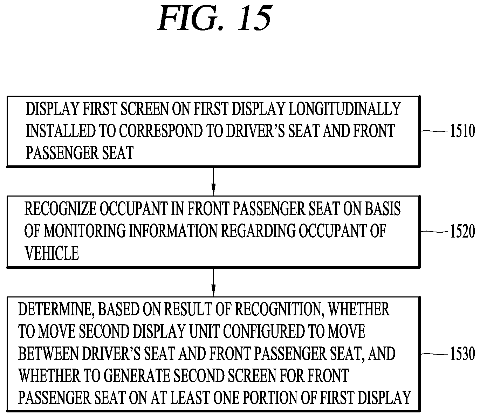

In an embodiment, the control unit 850 of the vehicular display device 800 may generate the first drive signal for enabling the display unit 820 of the vehicular display device 800 to operate in a driving direction from the driver's seat to the front passenger seat, on the basis of direction information corresponding to a first tilt direction included in the first signal that results from the first operation on the console 900. That is, as described above with reference to FIG. 15C, the vehicular display device 800 may be controlled to move toward the front passenger seat on the basis of the first tilt signal generated in the console 900.

In addition, in an embodiment, the control unit 850 of the vehicular display device 800 may generate the second drive signal for enabling the display unit 820 of the vehicular display device 800 to operate in a direction in which the display unit 820 thereof moves from the front passenger seat to the driver's seat, on the basis of direction information corresponding to a second tilt direction included in the first signal that results from the first operation on the console 900. That is, as described above with reference to FIG. 15D, the vehicular display device 800 may be controlled to move toward the driver's seat (or the center) on the basis of a second tilt signal generated in the console 900.

In an embodiment, the control unit 850 of the vehicular display device 800 may generate the second drive signal for enabling the display unit 820 of the vehicular display device 800 to operate in a direction in which the display unit 820 thereof is ejected outward from the internal space of the frame 802, on the basis of direction information corresponding to a third tilt direction included in the second signal that results from the second operation on the console 900. That is, as described above with reference to FIG. 15A, the vehicular display device 800 may be controlled to progressively move in a direction in which the vehicular display device 800 is exposed outward from the internal space of the frame 802, on the basis of the third tilt signal generated in the console 900.

In addition, in an embodiment, the control unit 850 of the vehicular display device 800 may generate the second drive signal for enabling the display unit 820 of the vehicular display device 800 to operate in a direction in which the display unit 820 is progressively retracted into the internal space of the frame 802, on the basis of direction information corresponding to a fourth tilt direction included in the second signal that results from the second operation on the console 900. That is, as described above with reference to FIG. 15B, the vehicular display device 800 may be controlled to progressively move in a direction in which the display device 800 is retracted into the internal space of the frame 802, on the basis of the fourth tilt signal generated in the console 900.

The operation of the vehicular display device 800 according to the embodiment of the present disclosure corresponds to an operation on the console 900, which is described above. This operation is for the screen control of the first display 825, rather than for the movement of the second display 820, because the occupant in the front passenger seat is not recognized on the basis of the sensing data from the DMS of the vehicle. In this case, the screen of the first display 825 and/or the selected movement direction may be determined based on direction information included in an operation on the console 900.

FIG. 13F is a block diagram illustrating a detailed configuration of the plurality of drive modules for moving the first display 825 and the second display 820 of the vehicular display device 800 according to the embodiment of the present disclosure in different directions.

Specifically, this block diagram is referenced to describe motor control for the movement of the vehicular display device 800 in the embodiments described with reference to FIGS. 13B to 13E.

In FIG. 13F, DCS may refer to a server for communication that enables the vehicular display device 800 to operate in conjunction with another device within the vehicle 100. The DCS provides communication that enables the vehicular display device 800 to operate in conjunction with the vehicle 100 or with a display device (not illustrated) for the rear seat of the vehicle 100.

In FIG. 13F, a motor control unit may control respective operations of the plurality of drive units 830 in order to move the first display 825 and the second display 820 of the vehicular display device 800 in different directions. In addition, the term "motor control unit" in FIG. 13F may be used to have the same structural component as the control unit 850 of the vehicular display device 800.

In FIG. 13F, a first motor control unit may control the operation of the first drive module 830a, among the plurality of drive units 830. In addition, the first motor control unit may control a first motor connected to the first drive module 830a. In an embodiment, the first drive module 830a may be understood as including the first motor that operates in conjunction with the first drive module 830a, and the first motor control unit (or a first motor controller) for controlling the first motor.

In FIG. 13F, a second motor control unit may control the operation of the second drive module 830b, among the plurality of drive units 830. Additionally, the second motor control unit may control a second motor that operates in conjunction with the second drive module 830b. In an embodiment, the second drive module 830b may be understood as including the second motor that operates in conjunction with the second drive module 830b, and a second motor control unit (or a second motor controller) for controlling the second motor.

In addition, in FIG. 13F, a first sensor may detect operation of the first motor that drives the vehicular display device 800 and/or may measure the distance by which the vehicular display device 800 moves in the transverse direction in response to the operation of the first motor. In addition, a second sensor may detect operation of the second motor that drives the vehicular display device 800 and/or may measure the degree of movement of the vehicular display device 800 in the longitudinal direction in response to the operation of the second motor.

Signals resulting from the first and/or second operations on the console 900 may each include the degree of movement of the display unit 820 or information about the movement distance of the display unit 820, depending on the degree of tilt in each operation on the console 900.

At this point, the degree of tilt in each operation may be represented by at least one of the following: the strength of tilt (tilt angle and tilt pressure) applied to the operation unit 910 of the console 900, the degree of movement, or the tilt maintenance time.

In addition, the aforementioned displacement information implies the degree of movement of the vehicular display device 800 that is mapped to each drive signal. For example, the information about the movement distance may include the distance by which the vehicular display device 800 moves in the transverse direction according to the first drive signal. In addition, the information about the movement distance may include the distance by which the vehicular display device 800 moves in the longitudinal direction according to the second drive signal.

The control unit 850 of the vehicular display device 800 may determine the driving distance of the drive module 830a or 830b corresponding to the first drive signal or the second drive signal, respectively, based on the distance information included in a signal (for example, one of the first to fourth tilt signals) received from the console 900. The movement distance (the degree of movement) of the display unit 820 varies on the basis of the determined driving distance of the drive module 830a or 830b.

In an embodiment, the control unit 850 of the vehicular display device 800 may generate the first drive signal for enabling the display unit 820 of the vehicular display device 800 to operate to move by a first distance in the transverse direction, on the basis of distance information corresponding to the first degree of tilt included in the first signal that results from an operation on the console 900. In this case, the vehicular display device 800 may detect, through the first sensor, that the display unit 820 moves by the first distance.

In addition, in an embodiment, the control unit 850 of the vehicular display device 800 may generate the first drive signal for enabling the display unit 820 of the vehicular display device 800 to move by a second distance, different from the first distance, in the transverse direction, on the basis of distance information corresponding to the second degree of tilt, which is included in the first signal that results from an operation on the console 900. In this case, the vehicular display device 800 may detect, through the first sensor, that the display unit 820 moves by the second distance.

In addition, in an embodiment, the control unit 850 of the vehicular display device 800 may generate the second drive signal for enabling the display unit 820 of the vehicular display device 800 to operate to move in the longitudinal direction, in such a manner that the display unit 820 is either retracted by a first depth into the internal space of the frame 802 or ejected outward from the internal space, on the basis of distance information corresponding to the first degree of tilt, which is included in the second signal that results from an operation on the console 900. In this case, the vehicular display device 800 may detect, through the second sensor, that the display unit 820 moves by the first distance.

In addition, in an embodiment, the control unit 850 of the vehicular display device 800 may generate the second drive signal for enabling the display unit 820 of the vehicular display device 800 to be either retracted, by a second depth different from the first depth, into the internal space of the frame 802, or ejected outward from the internal space, on the basis of distance information corresponding to the second degree of tilt included in the second signal that results from an operation on the console 850. In this case, the vehicular display device 800 may detect, through the second sensor that the display unit 820 moves by the second distance.

In an embodiment, the motor control unit may independently control respective operations of the first motor control unit and the second motor control unit.

The motor control unit operates in such a manner that the first motor control unit drives the first motor on the basis of the first drive signal. In addition, the motor control unit operates in such a manner that the second motor control unit drives the second motor on the basis of the second drive signal.

In a case where the first drive signal and the second drive signal are received simultaneously, the vehicular display device 800 may process a plurality of signals according to a predetermined standard.

In an embodiment, at a point in time when the first drive signal and the second drive signal are received simultaneously, the control unit 850 of the vehicular display device 800 may operate in such a manner that, after one drive module is completely driven, the other drive module is driven.

For example, in a case where the first drive signal and the second drive signal are sequentially received, the vehicular display device 800 may operate to move in the transverse direction in response to the first drive signal and subsequently move longitudinal direction in response to the second drive signal. At this point, the term "subsequently" in the expression "an operation is subsequently performed" refers to a case where the movement in the second direction starts immediately after movement in the first direction is completed or a case where the movement in the second direction starts within a predetermined time (e.g., 0.5 seconds) after the movement in the first direction is completed.

In addition, in an embodiment, the control unit 850 of the vehicular display device 800 may control the driving of the plurality of drive modules at a point in time where a drive signal is received, and, when it is determined that a plurality of drive signals, namely, the first and second drive signals, are received simultaneously, may control the driving of the drive modules according to a preset priority.

For example, when it is determined that the first and second drive signals are received simultaneously, the drive modules may be driven in such a manner that a movement operation corresponding to a preset specific direction is performed. As a specific example, the priority of movement directions of the vehicular display device 800 may be set as follows: the direction in which the vehicular display device 800 is ejected outward from the internal space of the frame (first priority), the direction in which the vehicular display device 800 moves between the driver's seat and the front passenger seat (second priority), and the direction in which the vehicular display device 800 is retracted into the internal space of the frame (third priority). In this case, when it is determined that the plurality of drive signals are received, the drive modules may operate sequentially to match the priority of preset movement directions.

In another embodiment, the control unit 850 of the vehicular display device 800 may control the simultaneous driving of the drive modules corresponding to the first and second drive signals based on the simultaneous reception of the first and second drive signals.

For example, with reference to FIG. 13F, when the first and second drive signals are simultaneously received, the motor control unit may individually control the first motor control unit and the second motor control unit in a manner that enables simultaneous driving. In this case, for example, the vehicular display device 800 may move in the transverse direction and, at the same time, be ejected from or retracted into the frame 802.

As described above, the movement of the second display 820 may be easily controlled through an operation on the console 900.

According to the present disclosure, a target of operation that results from an operation on the console 900 may vary depending on whether the vehicular display device 800 has recognized the presence of the occupant in the front passenger seat. Specifically, the target of operation that results from an operation on the console 900 may be determined to be either the first display 825 or the second display 820, depending on whether the vehicular display device 800 recognizes the occupant in the front passenger seat.

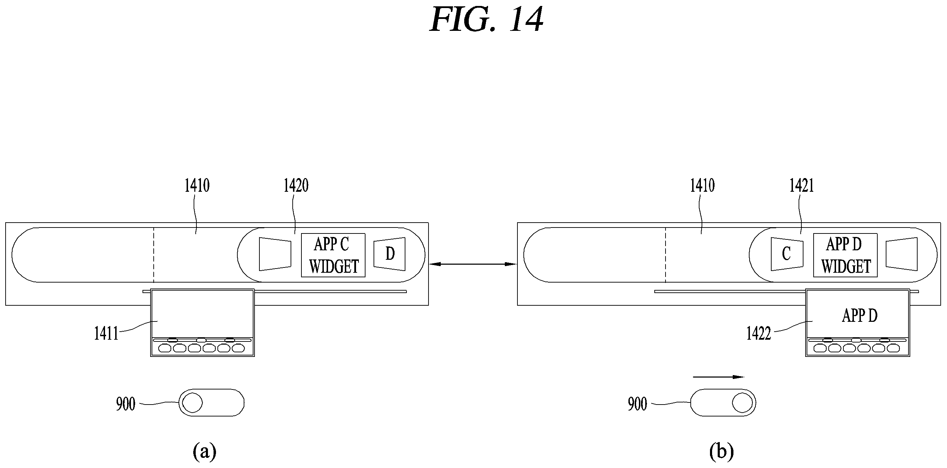

FIG. 14 is a conceptual diagram that is referenced to describe the control of the movement of the second display 820 on the basis of an operation on the console 900 in response to the detection of the occupant in the front passenger seat. At this point, it is presupposed that the console 900 has the same configuration as the input device 860 described with reference to FIG. 2.

The vehicular display device 800 communicates with the console 900 to receive a signal that is mapped to an operation on the console 900. In addition, according to the result of recognizing the occupant in the front passenger seat on the basis of the DMS sensing data, the vehicular display device 800 may operate the drive module 830a or 830b for the movement of the second display 820, in response to a signal corresponding to an operation on the console 900 under a first condition, and may perform screen control of the first display 825 in response to an operation on the console 900 under a second condition.

At this point, the first condition is a case where the occupant in the front passenger seat is recognized, and the second condition is a case where the occupant in the front passenger seat is not recognized.

In an embodiment, the vehicular display unit 800 may determine, on the basis of the monitoring information from the DMS, that the occupant in the front passenger seat is not recognized. A control target that results from an operation on the console 900 is mapped to the first display 825 according to the determination that the occupant in the front passenger seat is absent. Now, the screen of the first display 825 is controlled in response to an operation on the console 900.

In addition, in an embodiment, the vehicular display device 800 may determine, on the basis of the monitoring information received from the DMS, that the occupant in the front passenger seat is recognized. A control target that results from an operation on the console 900 is mapped to the second display 825 according to the determination that the occupant in the front passenger seat is present. Now, the movement of the second display 820 is controlled in response to an operation on the console 900.

With reference to FIG .14, when the vehicular display device 800 recognizes the presence of the occupant in the front passenger seat on the basis of the sensing data from the DMS of the vehicle, a second screen 1420 for the occupant in the front passenger seat is generated on one region of the first display 825.

At this point, the second screen 1420 is controlled independently of a first screen 1410 for the driver and is displayed at the position corresponding to the front passenger seat. The second screen 1420, for example, may be a menu screen for selecting an executable application.

The second display 820 may be fixed at the initial position thereof, namely, the position corresponding to the driver's seat (or the center). That is, when an additional operation occurs, the second display 820 may remain at the current position and state thereof without moving.

In a case where the second display 820 is exposed outward from the frame 802, a control screen or execution screen 1411 associated with either a first screen 1410 or a second screen 1420 may be displayed on the second display 820.

In this manner, in a state where the second screen for the occupant in the front passenger seat is generated on the first display 825 after the occupant in the front passenger seat is detected (in (a) of FIG. 14), in response to a rightward movement operation on the console 900, the second display 820 operates to move toward the front passenger seat to the right (in (b) of FIG .14).

When the movement of the second display 820 is completed, the second display 820 now operates in such a manner that only a control screen or execution screen, associated with the second screen which is output on the first display 825, is displayed on the screen of the second display 820. For example, the occupant in the front passenger seat may perform screen control of the second screen, directly or through the second display 820. For example, when a menu screen, serving as the second screen, for selecting an executable application is changed from "App C" to "App D," the menu screen, serving as the second screen of the first display 825, is displayed with "App D" positioned at the center, and a control screen or execution screen 1422 associated with "App D" is displayed on the second display 820.

Although not illustrated, when a leftward movement operation is applied to the console 900 in a state illustrated in (b) of FIG. 14, the second display 820, as illustrated in (a) of FIG. 14, moves to the initial position thereof. When the second display 820 has moved to the position corresponding to the driver's seat (or the center), a control screen or execution screen associated with the first screen 1410 for the driver is displayed on the second display 820.

When the absence of the occupant in the front passenger seat is recognized on the basis of the sensing data from the above-described DMS of the vehicle, the first display 825 operates such that the screen thereof is displayed in the full mode. In addition, the vehicular display device 800 enables the screen of the first display 825 to be controlled in response to an operation on the console 900. That is, depending on the direction of an operation on the console 900, the entire first screen 1410 of the first display 825 may be changed, or the selection of an item within the first screen 1410 may be changed.

At this point, the second display 820 may be in a state of being retracted into the inner space of the frame or in a state of being exposed outward through the slot formed in the frame. In the latter case, a control screen or execution screen associated with the first screen of the first display 825 is displayed on the second display 820.

Although not illustrated, in a case where the vehicle is not being driven, in addition to a navigation screen for the driver, various infotainment screens may be provided using the first screen displayed on the first display 825.

FIG. 15 is a flowchart that is referenced to describe a method, according to an embodiment of the present disclosure, of selectively moving the vehicular display device and performing screen control of the first display, depending on whether the occupant in the front passenger seat is detected.

With reference to FIG. 15, when the ignition of the vehicle is turned on, the vehicular display device 800 activates the first display 825, thereby displaying the first screen (S1510). At this point, the first screen may automatically switch from an initial setup screen to a navigation screen for driving.

Subsequently, the vehicular display device 800 may communicate with the DMS mounted within the vehicle and may receive the DMS sensing data as monitoring information about the occupant of the vehicle. The vehicular display device 800 may recognize the occupant in the front passenger seat on the basis of the received monitoring information (S1520).

Subsequently, in response to the recognition of the occupant in the front passenger seat, the vehicular display device 800 may determine whether to move the second display 820 and whether to generate the first screen on the first display 825 (S1530).

Specifically, when the occupant in the front passenger seat is recognized, the vehicular display device 800 may generate the second screen for the occupant in the front passenger seat on the first display 825 and may control the movement of the second display 820 in such a manner that the second display 820 is positioned at the position corresponding to the front passenger seat. At this point, the first and second displays 825 and 820 may operate in a changed order or simultaneously.

When it is determined that the occupant in the front passenger seat is not recognized, the first display 825 may be controlled in such a manner that the screen thereof remains in the full mode and the second display 820 remains in the initial position thereof. At this point, if the driver's attempt to control the first screen displayed on the first display 825 using the second display 820 is detected, the second display 820 may be controlled in such a manner that the second display 820 moves to be ejected outward from the frame. At this point, the attempt to control the first screen displayed on the first display 825 may include, for example, the driver's gaze being directed at the first display 825 for a predetermined period of time or the driver's attempt to interact with the first display 825, on the basis of the sensing data from the DMS.

In this manner, depending on whether the occupant in the front passenger seat is detected, the vehicular display device 800 may enable a control-target display, resulting from an operation on the console 900, to be applied in a different manner. Accordingly, user convenience may be provided the position of the user in a more suitable manner. In addition, when the occupant in the front passenger seat is detected, the vehicular display device 800 operates both to generate the second screen for the occupant in the front passenger seat and to move the second display for controlling the second screen, thereby enhancing the usability of a plurality of provided displays and providing a convenient user experience.

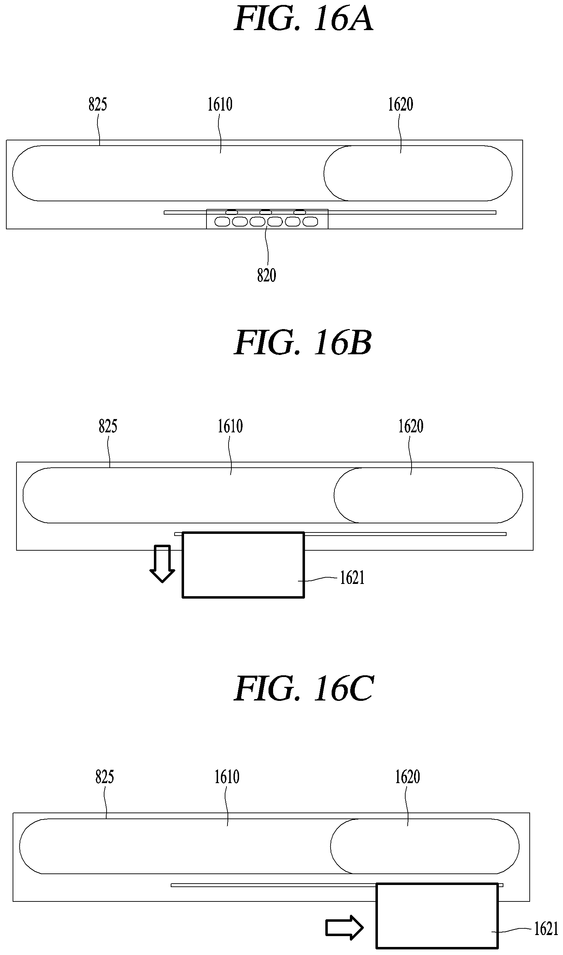

FIGS. 16A to 16C are conceptual diagrams that are referenced to describe the control of the movement of the vehicular display device in the occupant-triggered execution mode, according to an embodiment of the present disclosure.

In an embodiment, when the occupant in the front passenger seat is recognized on the basis of the sensing data from the DMS of the vehicle, the vehicular display device 800 may determine that the first condition is satisfied. At this point, the first condition may be defined as either the occupant in the front passenger seat intending to use the first display 825 (e.g., attempting to interact therewith) or the occupant lacking a clear intention not to use at least the first display 825 (e.g., when a drowsy state of the occupant in the front passenger seat is not detected).

When the first condition is satisfied in this manner, the control unit 850 of the vehicular display device 800 displays the second screen for the occupant in the front passenger seat on the first display 825. Moreover, the operation of the first drive module 830a may be controlled on the basis of a first operation signal received in response to an operation on the console 900 in such a manner that the second display 820 moves to the position corresponding to the front passenger seat along the transverse direction of the frame 802.

With reference to FIG. 16A, in response to the recognition of the occupant in the front passenger seat, a second screen 1620 for the occupant in the front passenger seat is generated on the first display 825 and separated from a first screen 1610, thereby being displayed independently. At this point, the second display 820, as illustrated, may be in a state of being retracted into the internal space of the frame and in a state of being exposed outward from the internal space.

In this state, although not illustrated, the second display 820 may move to the position corresponding to the front passenger seat on the basis of an operation on the cooperatively operating console 900 (in FIG. 13A) (that is, on the basis of the received first operation signal). As another example, in response to the attempt by the occupant in the front passenger seat to interact with the second screen 1620, the second display 820 may move to the position corresponding to the front passenger seat.

Specifically, the second drive module 830b mapped to the second display 20 operates in such a manner that the second display 820 retracted as illustrated in FIG. 16B is exposed outward from the frame. At this point, a control screen or execution screen 1621 associated with the second screen 1620 of the first display 825 may be displayed on the second display 820 exposed outward from the frame.

Next, as illustrated in FIG. 16C, the first drive module 830a mapped to the second display 820 operates in such a manner that the second display 820 moves to the position corresponding to the front passenger seat. Accordingly, the occupant in the front passenger seat may easily control the second screen of the first display 825 without changing his/her posture, using the screen 1621 displayed on the second display 820.

In another embodiment, although the first condition is satisfied due to the recognition of the occupant in the front passenger seat, in a case where there is no operation on the console 900 or no interaction attempt by the occupant in the front passenger seat, the second display 825 may remain in the initial position thereof. At this point, when the second display 825 is in a state of being exposed outward from the frame, the existing screen, for example, the control screen or execution screen associated with the first screen for the driver, may be displayed.

In addition, although the first condition is satisfied due to the recognition of the occupant in the front passenger seat, an operation on the console 900 may be directed toward the driver's seat (rather than toward the front passenger seat). In this case (that is, on the basis of the received second operation signal), it may be determined that the driver intends to use the second display 820, and the control screen or the execution screen associated with the first screen for the driver may be displayed on the second display 820.

When the occupant in the front passenger seat is not recognized on the basis of the sensing data from the DMS, the vehicular display device 800 may operate to control the screen of the first display 825 in response to an operation on the cooperatively operating console 900.

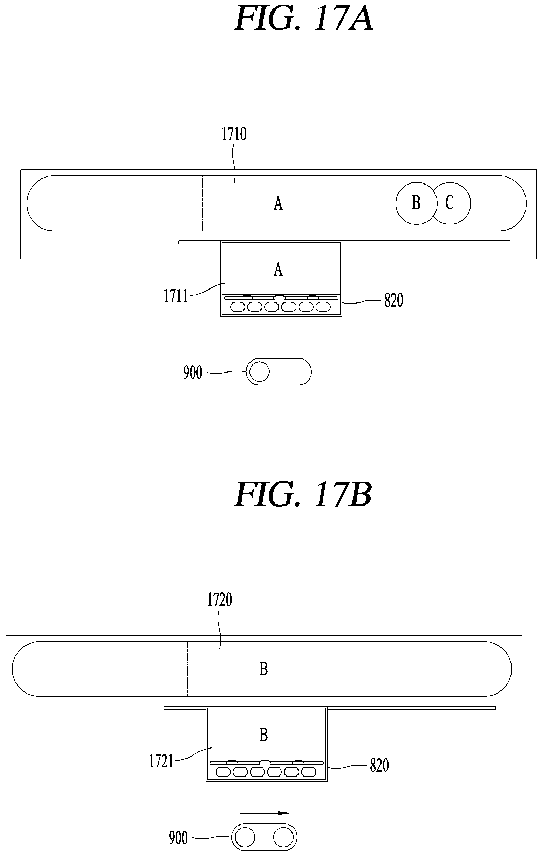

FIGS. 17A and 17B are exemplary conceptual diagrams that are referenced to describe the screen control of the first display corresponding to an operation on the console in the driver-triggered execution mode.

In an embodiment, when the occupant in the front passenger seat is not recognized on the basis of the monitoring information received from the DMS of the vehicle, the control unit 850 of the vehicular display device 800 may determine that the second condition is satisfied.

At this point, the second condition may be defined as either at least the occupant in the front passenger seat not being detected, or the occupant clearly intending not to use the first display 825 (e.g., when a drowsy state of the occupant in the front passenger seat is detected).

When the second condition is satisfied in this manner, the control unit 850 of the vehicular display device 800 may restrict the respective operations of the plurality of drive modules 830a and 830b, each of which varies according to a control signal generated on the basis of an operation on the input device, namely, the console 900, which is mapped to the plurality of drive modules 830a and 830b.

At this point, restricting the respective operations of the plurality of drive modules 830a and 830b means that an operation on the console 900 does not serve as an input for controlling the movement of the second display 820.

In a case where the occupant in the front passenger seat is not recognized, the vehicular display device 800 may operate in the driver-triggered execution mode. In the driver-triggered execution mode, the screen of the first display 825 operates in the full mode. In addition, in the driver-triggered execution mode, the second display 820 operates as the control screen or execution screen of the first screen for the driver, which is displayed on the first display 825.

In this driver-triggered execution mode, the first screen of the first display 825 is controlled on the basis of direction information included in an operation signal generated in response to an operation on the console 900. In addition, the control screen or execution screen associated with the first screen is displayed on the second display 820, and the second display 820 operates in such a manner that the driver controls the first screen.

For example, with reference to FIG. 17A, while a first screen 1710 of the first display 825 is displayed in the full mode in the driver-triggered execution mode, the second display 820 may remain exposed outward from the frame at the position corresponding to the driver's seat (or the center).

At this point, the first screen 1710, for example, a control screen or execution screen 1711 associated with the selection of application "A," may be displayed on the second display 820.

In this state, when an operation input is applied in the rightward direction through an operation on the cooperatively operating console 900, as illustrated in FIG. 17B, a first screen 1720, resulting from making a change in response to the selection of application "B," is displayed on the first display 825, rather than causing the movement of the second display 820. Moreover, the screen of the second display 820 is switched to a control screen or execution screen 1721 associated with the selection of application "B."

In addition, in the driver-triggered execution mode, the second display 820 may operate in such a manner that the movement thereof is restricted, on the basis of the monitoring information from the DMS of the vehicle. At this point, in the driver-triggered execution mode, the monitoring information from the DMS of the vehicle may include monitoring information indicating whether the driver is engaged in driving.

Specifically, when it is recognized, on the basis of the monitoring information received from the DMS, that the driver is engaged in driving, the control unit 850 of the vehicular display device 800 may operate in such a manner that the second display 820 is retracted into the internal space of the frame 802. The reason for this is to hide the second display 820 from the driver's field of view, thereby promoting safe driving.

Therefore, restricting the movement of the second display 820 may include returning the second display 820 to a predetermined position and state, rather than leaving the second display 820 in the current position thereof.

The vehicular display device 800 may operate based on the vehicle's state information in such a manner that the movement of the second display 820 is restricted. Specifically, when a driving speed of the vehicle reaches or exceeds a predetermined speed, the vehicular display device 800 may generate a control signal for operating the second drive module 830b in such a manner that the second drive module 820 is retracted into the internal space of the frame.

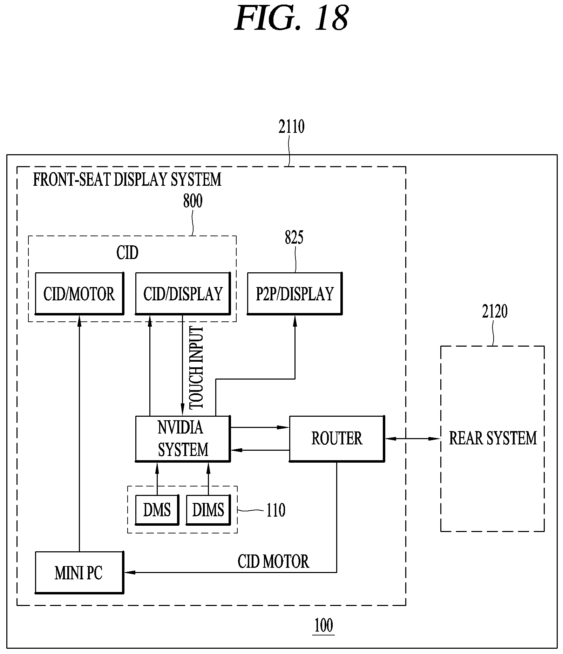

FIG. 18 is an exemplary diagram that is referenced to describe the operation of the vehicular display device 800 according to the present disclosure in conjunction with the display device for the rear seat of the vehicle.

FIG. 18 is also an exemplary block diagram that is referenced to the operation of the vehicular display device 800 according to the present disclosure in conjunction with the display device for the rear seat of the vehicle.

The vehicular display device 800 according to the embodiment of the present disclosure may be either one portion of a front-seat display system 2110 positioned in front of the front seat of the vehicle, or the front-seat display system 2110 itself. In this case, the front-seat display system 2110 may operate in c conjunction with a rear-seat display device or system 2120 positioned near the rear seat of the vehicle 100.

To this end, the front-seat display system 2110, as illustrated in FIG. 21, may be configured to include the vehicular display device 800, the first display 825, a control board system (NVIDIA system), a monitoring system 110, a mini PC, and a router.

At this point, the vehicular display device 800 may be configured to include a display unit, namely, a CID, and a motor that provides driving force to drive the CID.

For example, the control board system (NVIDIA system) may control the first display unit 825, namely, a P2P screen, on the basis of a touch input to the CID of the vehicular display device 800.

Additionally, the control board system (NVIDIA system) may control the driving of the vehicular display device 800 and the screen of the first display 825 on the basis of the result of operating the monitoring system 110 of the vehicle, for example, the DMS.

The front-seat display system 2110 may communicate with the rear-seat display system 2120 of the vehicle 100 through the router. The front-seat display system 2110 may control the operation of the vehicular display device 800 of the front-seat display system 2110 on the basis of an operational state of the rear-seat display system 2120.

For example, when the operational state of the rear-seat display system 2120 is received by the front-seat display system 2110 through the router, the mini PC is involved in operating the motor for the CID of the vehicular display device 800, namely, the plurality of drive units 830. Specifically, on the basis of a drive signal generated by the mini PC, the motor for the CID operates in synchronization with the operation of the rear-seat display system 2120.

Conversely, for example, an operational state of the vehicular display device 800 or the front-seat display system 2110 may also be transferred to the rear-seat display system 2120 through the router. In this case, the rear-seat display system 2120 may be driven, or driven in a restricted manner, to operate in synchronization with the operation of the front-seat display system 2110.

As described above, in the vehicular display device according to the embodiment of the present disclosure and the method of operating the vehicular display device, the screen for the occupant in the front passenger seat is automatically generated on the first display installed to extend longitudinally over a long distance when the presence of the occupant in the front passenger seat is recognized. Accordingly, the occupant in the front passenger seat can be immediately provided with a desired service without requiring an additional operation. In addition, the second display is configured to be movable and to move automatically toward the front passenger seat when the presence of the occupant in the front passenger seat of the vehicle is recognized. Accordingly, the occupant in the front passenger seat can easily control the second screen for the occupant in the front passenger seat through the second display that has moved. Moreover, when the presence of the occupant in the front passenger seat is not recognized, the movable second display is controlled in such a manner as to be used to control the screen for the driver. Accordingly, the movable second display can be utilized not only for the occupant in the front passenger seat, but also for the driver, thereby enhancing the user experience and the usability.

The present disclosure may be implemented in the form of computer-readable code recorded on a program-recorded medium. The computer-readable media include all types of recording devices capable of storing data that are readable by a computer system. Examples of media readable by computers include hard disk drives (HDDs), solid state disks (SSDs), silicon disk drives (SDDs), ROM, RAM, CD-ROM, magnetic tapes, floppy disks, optical data storage devices, and other similar media. In addition, these media may further include transmission media, such as waves (e.g., waves transmitted over the Internet). In addition, the computer may also include a controller/processor of the vehicular display device 800. Therefore, the detailed description should not be interpreted in a limited manner in all respects and should be considered as serving the purpose of illustration. The scope of the present disclosure should be determined by the proper interpretation of the following claims. All equivalent modifications to the embodiments of the present disclosure fall within the scope of the present disclosure.

## Claims

1. A vehicular display device comprising:
a first display unit that is arranged within a frame formed to correspond to a driver's seat and a front passenger seat within a vehicle and that is installed longitudinally to correspond to the driver's seat and the front passenger seat;
a second display unit that is coupled to one side of the frame and configured to move between the driver's seat and the front passenger seat along the transverse direction of the frame through operation of a drive module;
a reception unit that receives monitoring information about an occupant based on DMS sensing information from the vehicle; and
a control unit that controls respective operations of the first display unit, the second display unit, and the drive module,
wherein the control unit displays a first screen on the first display unit, recognizes an occupant in the front passenger seat on the basis of the received monitoring information, and determines, based on the result of the recognition, whether a second screen for the front passenger seat is generated on at least one portion of the first display unit.

2. The vehicular display device of claim 1, wherein the control unit determines a screen control target of the first display, the screen control target corresponding to an input to the second display, in a manner that varies depending on whether the occupant in the front passenger seat is recognized.

3. The vehicular display device of claim 1, wherein, when the occupant in the front passenger seat is recognized on the basis of the received monitoring information, the control unit executes an occupant-triggered execution mode and displays the second screen on a region of the first display unit, the region corresponding to the front passenger seat.

4. The vehicular display device of claim 3, wherein the second display unit is coupled to both the first drive module and the second drive module and moves between the driver's seat and the front passenger seat along the transverse direction of the frame in response to operation of a first drive module, and at least one portion of the second display unit is retracted into or ejected outward from the internal space of the frame in response to operation of a second drive module, and
wherein, in response to the execution of the occupant-triggered execution mode, based on each control signal, the control unit controls the operation of the second drive module in such a manner that the at least one portion of the second display unit is changed to a state of being ejected outward from the frame and controls the operation of the first drive module in such a manner that the second display unit moves to a position corresponding to the front passenger seat along the transverse direction of the frame.

5. The vehicular display device of claim 4, wherein, when it is determined that the occupant in the front passenger seat who is recognized on the basis of the received monitoring information remains motionless or is in a state of sleep for a predetermined period of time in the occupant-triggered execution mode, the control unit controls the operation of the second drive module in such a manner that the second display unit is retracted into the internal space of the frame.

6. The vehicular display device of claim 1, wherein the control unit generates a second screen for the front passenger seat on the first display unit when the occupant in the front passenger seat is recognized, and then displays the first screen, rather than the second screen for the front passenger seat, on the entire first display unit, when the occupant in the front passenger seat remains motionless or is in a state of sleep for a predetermined period of time or longer.

7. The vehicular display device of claim 1, further comprising:
an input unit for controlling movement of the second display unit,
wherein the control unit determines that the second screen is not displayed, when the occupant in the front passenger seat is not recognized on the basis of the received monitoring information, and controls the first screen on the basis of an input to the input unit, according to the determination.

8. The vehicular display device of claim 1, further comprising:
a communication unit that communicates with an input unit that selectively controls either the operation of the drive module for movement of the second display unit or a screen of the first display unit, and receives a signal corresponding to an operation on the input unit,
wherein the control unit receives a signal mapped to the operation on the input unit and, according to the result of recognizing the occupant in the front passenger seat, operates the drive module for the movement of the second display unit, under a first condition, and performs screen control of the first display unit under a second condition.

9. The vehicular display device of claim 8, wherein, when the occupant in the front passenger seat is recognized on the basis of the received monitoring information, the control unit determines that the first condition is satisfied and displays the second display on a region of the first display unit, the region corresponding to the front passenger seat, and controls the operation of the drive module on the basis of a received first operation signal in such a manner that the second display unit moves to a position corresponding to the front passenger seat along the transverse direction of the frame.

10. The vehicular display device of claim 9, wherein, when the second display moves to the position corresponding to the front passenger seat under the first condition, the control unit displays a control screen of the second screen on the second display unit.

11. The vehicular display device of claim 9, wherein, when the first condition is satisfied and the first operation signal is not received, or when a second operation signal, mapped to the operation of the drive module for the movement of the second display unit along the transverse direction of the frame to a position corresponding to the driver's seat, is received, the control unit displays a control screen of the first screen on the second display unit.

12. The vehicular display device of claim 8, wherein, when the occupant in the front passenger seat is not recognized on the basis of the received monitoring information, the control unit determines that the second condition is satisfied, perform screen control of the first display unit on the basis of the received signal, and displays a control screen of the first display unit on the second display unit.

13. The vehicular display device of claim 1, wherein the second display unit is coupled to both the first drive module and the second drive module and moves between the driver's seat and the front passenger seat along the transverse direction in response to operation of the first drive module, and at least one portion of the second display unit is changed to a state of being retracted into or ejected outward from the internal space of the frame in response to operation of the second drive module, and
wherein the control unit recognizes, on the basis of the received monitoring information, that the driver is engaged in driving, and, when a driving speed of the vehicle reaches or exceeds a predetermined driving speed, generates a first control signal for operating the second drive module in such a manner that the second display unit is changed to a state of being retracted into the internal space of the frame.

14. A vehicular display device comprising:
a first display unit that is arranged within a frame formed to correspond to a driver's seat and a front passenger seat within a vehicle and that is installed longitudinally to correspond to the driver's seat and the front passenger seat;
a second display unit that is coupled to one side of the frame and is configured to move between the driver's seat and the front passenger seat along the transverse direction of the frame through operation of a drive module;
a reception unit that receives monitoring information about an occupant based on DMS sensing information from the vehicle; and
a control unit that controls respective operations of the first display unit, the second display unit, and the drive module,
wherein the control unit displays a first screen on the first display unit, recognizes an occupant in the front passenger seat on the basis of the received monitoring information, and determines, based on the result of the recognition, whether the drive module operates in response to an input for movement of the second display unit.

15. The vehicular display device of claim 14, wherein the control unit determines, based on the result of recognizing an occupant in the front passenger seat, that a second screen for the front passenger seat is generated at least on one portion of the first display unit.

16. The vehicular display device of claim 15, wherein, when the occupant in the front passenger seat is recognized on the basis of the received monitoring information, the control unit executes an occupant-triggered execution mode and controls the operation of the drive module for the movement of the second display unit, in response to a control signal generated on the basis of an input to an input unit mapped to the drive module.

17. The vehicular display device of claim 14, wherein, when the occupant in the front passenger seat is not recognized on the basis of the received monitoring information, the control unit restricts driving of the drive module in response to a control signal generated on the basis of an input to an input unit mapped to the drive module, and controls the first screen displayed on the first display unit, in response to the generated control signal.
